# EUROPÄISCHE PATENTSCHRIFT

(11) **EP 3 999 740 B1**
(45) Veröffentlichungstag und Bekanntmachung des Hinweises auf die Patenterteilung: **18.02.2026**
(21) Anmeldenummer: 20733400.4
(22) Anmeldetag: 15.06.2020
(51) Int. Cl.: F03D 13/00, F03D 80/50, E04G 23/08, E04H 12/34, F03D 13/20

(54) **VERFAHREN ZUR DEMONTAGE EINES TURMS EINER WINDENERGIEANLAGE**
METHOD FOR THE DISASSEMBLY OF TOWER OF A WIND POWER PLANT
PROCÉDÉ POUR DÉMONTER UNE TOUR D'UNE ÉOLIENNE

(30) Priorität: 15.07.2019 DE 102019119127
(43) Veröffentlichungstag der Anmeldung: 25.05.2022
(73) Patentinhaber: Wobben Properties GmbH, 26607 Aurich (DE)
(72) Erfinder: HOFMANN, Jens, 39175 Biederitz (DE); KAPITZA, Jan, 26629 Großefehn (DE)
(74) Vertreter: Eisenführ Speiser
(86) Internationale Anmeldenummer: PCT/EP2020/066479
(87) Internationale Veröffentlichungsnummer: WO 2021/008795

(56) Entgegenhaltungen:
- EP-A1- 2 253 782
- WO-A1-00/34651
- WO-A1-2014/037421
- WO-A1-2018/189852
- DE-B3- 102016 113 227
- US-A1- 2005 129 504
- "Brechen und Sieben Fachaustausch zu End-of Life von Windenergieanlagen", 1 November 2018, article BETTINA & BÖNISCH ET AL: "Brechen und Sieben Fachaustausch zu End-of Life von Windenergieanlagen", XP055726839
- MARKUS BINDING: "Recycling von Windkraftanlagen - aktuelle Verfahren - Status Quo", 19 November 2018 (2018-11-19), XP055726809, Retrieved from the Internet <URL:http://www.cleantech-ost.de/fileadmin/user_upload/chefredakteur1/WKA/Veolia.pdf> [retrieved on 20200902]

## Beschreibung

Die Erfindung betrifft ein Verfahren zur, insbesondere vollständigen oder teilweisen, Demontage eines Turms einer Windenergieanlage.

Nach Ende der Lebensdauer einer Windenergieanlage, meist nach 20 bis 25 Jahren, oder aufgrund einer Stilllegung aus anderen Gründen, kann es erforderlich sein, eine Windenergieanlage zurückzubauen, evtl. sogar vollständig. Dieser Rückbau ist mit einer Vielzahl von Herausforderungen verbunden. In den Anmeldungen DE 10 2019 102 688.1 und DE 10 2019 116 840.6 werden bestimmte Aspekte des Rückbaus von Türmen von Windenergieanlagen beschrieben.

US 2005/0129504 A1 offenbart eine Windturbine mit einem stationären vertikalen Mast, an welchem der bewegbare Teil einer Windturbine angeordnet ist, wobei der Turm zumindest teilweise aus vorgefertigten Teilen besteht.

Das Deutsche Patent- und Markenamt hat in der Prioritätsanmeldung zu vorliegender Anmeldung folgenden Stand der Technik recherchiert: DE 102016 113 224 B3, DE 10 2018 107 421 A1, "Brechen und Sieben Fachaustausch zu End-of-life von Windenergieanlagen" Fachagentur Windenergie an Land e.V., "K 19 Naturschutz in der Energiewende" Kompetenzzentrum Naturschutz und Energiewende KNE gGmbH, "Recycling von Windkraftablagen - aktuelle Verfahren - Status Quo" CIO - Informationsveranstaltung.

DE 10 2016 113 227 B3 betrifft eine Arbeitsvorrichtung zum Durchführen von Arbeiten an Türmen, insbesondere Betontürmen von Windenergieanlagen, mit einem Grundgestell, das mindestens drei Auflagerarme umfasst, die sich von einem Zentralkörper radial auswärts erstrecken und zur Befestigung auf einer Oberseite des Turms ausgebildet sind. An dem Grundgestell ist ein um eine senkrechte Achse drehbar angeordneter Auslegerarm vorhanden. Eine Arbeitskabine ist an dem Auslegerarm über eine Seilaufhängung gegenüber dem Auslegerarm in der Höhe verstellbar.

Es ist daher eine Aufgabe der vorliegenden Erfindung, ein Verfahren zur vollständigen oder teilweisen Demontage eines Turms einer Windenergieanlage bereitzustellen, welches einen verbesserten Rückbau von Windenergieanlagen ermöglicht. Insbesondere ist es eine Aufgabe der vorliegenden Erfindung, ein Verfahren zur vollständigen oder teilweisen Demontage eines Turms einer Windenergieanlage bereitzustellen, welches einen Rückbau von Windenergieanlagen ermöglicht, der gegenüber existierenden Lösungen kostengünstiger und/oder sicherer und/oder ressourcenschonender ist.

Diese Aufgabe wird erfindungsgemäß gelöst durch ein Verfahren zur - insbesondere vollständigen oder teilweisen - Demontage eines Turms einer Windenergieanlage, gemäß Anspruch 1. Das erfindungsgemäße Verfahren ist gekennzeichnet durch Untersuchen von Beschichtungen des Turms und/oder seinen Bauteilen; und Entfernen von Beschichtungen, insbesondere umweltbelastenden Beschichtung, insbesondere mittels eines Hochdruckwasserstrahls und/oder einer Schleifeinrichtung sowie ggf. einer Absaugeinrichtung.

Windenergieanlagen haben eine derzeitige Lebensdauer von ca. 20 bis 25 Jahren. Nach Erreichen des Endes der Lebensdauer oder bei sonstiger Stilllegung ist es gegebenenfalls gewünscht oder sogar gesetzlich vorgeschrieben, die Windenergieanlagen vollständig oder teilweise abzubauen. Wiederverwendbare Komponenten werden dabei bevorzugt so behandelt, dass sie wiedereingesetzt werden können. Komponenten von Windenergieanlagen können nach dem Rückbau auch einem Recycling- oder Entsorgungsprozess zugeführt werden. Der Rückbau und die Demontage von Windenergieanlagen sind nicht einfach und müssen in der Regel durch geschultes Fachpersonal mit ausreichender Erfahrung durchgeführt werden. Die hier vorgestellte Lösung ist nicht nur für Türme von Windenergieanlagen anwendbar, sondern kann vorzugsweise auch auf andere turmartige Bauwerke Anwendung finden.

Die hier vorgestellte Lösung beruht unter anderem auf der Erkenntnis, dass für die Demontage eines Turms einer Windenergieanlage geeignete Maßnahmen in Abhängigkeit des Turmstandorts und der Turmeigenschaften auszuwählen sind. Verschiedene Demontage-Maßnahmen sind für Türme mit unterschiedlichen Eigenschaften und an unterschiedlichen Standorten gut geeignet, für andere Türme und/oder an anderen Standorten hingegen weniger geeignet. Die Berücksichtigung von Standort und Eigenschaften des Turms sind somit für eine sichere und kostengünstige Demontage vorteilhaft.

Das Vorbereiten der Demontage dient insbesondere dazu, die Voraussetzungen für die Demontage zu schaffen. Beispielsweise kann die Demontage eines Turms einer Windenergieanlage voraussetzen, dass das Gebiet um die Windenergieanlage herum ausreichend gesichert und/oder abgesperrt ist, sich die elektrischen Anschlüsse und Kabeldurchführungen der Windenergieanlage in einem für die Demontage zulässigen Zustand befinden, und/oder die zu demontierende Windenergieanlage vom Stromnetz getrennt ist. Ferner vorzugsweise sollten Anforderungen an die Arbeitssicherheit sichergestellt sein sowie entsprechende Zufahrtsmöglichkeiten, erforderliche Werkzeuge, Lagermöglichkeiten und Hilfsmittel zur Verfügung stehen.

Für die Demontage eines Turms einer Windenergieanlage bevorzugte Vorbereitungshandlungen können sich auch auf Einbaukomponenten, Rotorblätter und/oder die Gondel beziehen. Als Einbaukomponenten werden vorzugsweise im Turm und in der Gondel die Kabel entfernt, vorzugsweise mittels Ziehschläuchen, die an Winden befestigt werden. Ferner vorzugsweise werden die Schellen von abzulösenden Kabeln und Kabelhalterschienen im Turm gelöst und die Kabel im Turm abgelassen. Entfernte Kabel können vorzugsweise in Containern gesammelt werden. Die Kabel des E-Moduls werden vorzugsweise in die untere Ebene des E-Moduls zurückgezogen und nach oder gegen Ende der Demontage des Turms vorzugsweise zusammen mit dem E-Modul entfernt. Die vorherige Entfernung und Sammlung der Kabel hat den Vorteil, dass die Kabel und gegebenenfalls auch Kabelschellen oder sonstige Kabelhalterungen wiederverwendet werden können oder in ihre Bestandteile zerlegt, gereinigt, eingeschmolzen und einer neuen Nutzung zugeführt werden können. Alternativ können die Kabel auch in der Windenergieanlage verbleiben und erforderlichenfalls zerschnitten und zusammen mit dem Turm demontiert werden.

Vorzugsweise umfasst die Vorbereitung der Demontage auch das Herausfahren des Antriebsteils der Aufstiegshilfe aus der Winde heraus, bevor die Windenergieanlage spannungsfrei geschaltet wird. Vorzugsweise werden für den Ausbau der Aufstiegshilfe die Führungsseile gelöst und abgelassen sowie der Fahrkorb ausgebaut. Auch die Aufstiegshilfe kann beispielsweise wiederverwendet oder gegebenenfalls in ihre Bestandteile zerlegt und so entsorgt oder einer erneuten Nutzung zugeführt werden.

Wenn für die weiteren Demontage-Maßnahmen erforderlich, kann das Vorbereiten der Demontage den Einbau eines Bauaufzugs anstelle der Aufstiegshilfe beinhalten.

Weitere Einbauten wie Abluftschläuche, Geländer, Haltegriffe, Gitterrost, Seitenbleche, Konsolen, Netze, Netzbügel, Schlauchhalterungen, Liftseilführungen, Liftrahmen, Kabelhalter, etc. werden vorzugsweise im Zuge der Vorbereitung der Demontage entfernt und, soweit erforderlich, weiter zerlegt sowie, soweit möglich, wiederverwendet oder beseitigt bzw. entsorgt. Alle Gefäße, in denen Flüssigkeit enthalten ist, werden im Zuge der Vorbereitung der Demontage vorzugsweise verschlossen oder entleert und die Flüssigkeit ihrer Art entsprechend verwertet oder entsorgt.

Vorzugsweise werden die Rotorblätter einer Windenergieanlage gemeinsam mit dem Rotorkopf demontiert, anderenfalls werden die Rotorblätter vorzugsweise einzelnen von der Windenergieanlage entfernt. Hierzu wird der Rotor vorzugsweise arretiert. Es können sich gegebenenfalls weitere Arbeiten anschließen, wie beispielsweise das Trennen geteilter Blätter, der Abbau von Hinterkantensegmenten oder der Ausbau der Blattheizung. Die Bestandteile von Rotorblättern werden vorzugsweise so weit wie möglich getrennt und verwertet. Zerkleinerte Rotorblätter können vorzugsweise bei der Neuherstellung von Rotorblättern eingesetzt oder als Füllstoff in bestimmten Kunststoffen verwendet werden. Eine alternative Möglichkeit ist die thermische Verwertung in Verbrennungsanlagen zur Energieerzeugung oder als Brennstoff für die Zementindustrie.

Auch der Rotorkopf kann vorzugsweise als solcher wiederverwendet oder der Entsorgung zugeführt werden. Verkleidungsteile aus Aluminium oder Gussteile und Stahlkomponenten können vorzugsweise eingeschmolzen und einer erneuten Nutzung zugeführt werden.

Auch die Demontage des Generators und des Maschinenhauses kann zur Vorbereitung der Demontage des Turms eine Windenergieanlage von Vorteil sein. Je nach Größe und vorhandener Krantechnik können Generator und Maschinenhaus in Teilen oder komplett am Kran angeschlagen und abgesenkt werden. Auch diese Komponenten werden vorzugsweise - insbesondere nach Überholung - wiederverwendet oder deren Bestandteile recycelt oder fachgerecht entsorgt.

Diese bevorzugten Handlungen der Vorbereitung der Demontage erfolgen vorzugsweise vor dem Durchführen der eigentlichen Demontage des Turms. Bevorzugte Möglichkeiten zur Demontage des Turms werden im Folgenden näher beschrieben. Nach erfolgter Demontage des Turms erfolgt der Abtransport des demontieren Turms vom ursprünglichen Turmstandort. Dieses Abtransportieren des demontierten Turms beinhaltet in der Regel den Abtransport von Turmsegmenten oder zerkleinerten Turmsegmenten oder einzelnen Bestandteilen oder Komponenten.

Vorzugsweise umfasst der Turm ein Fundament. In der hier vorliegenden Beschreibung wird ein Fundament vorzugsweise als Teil eines Turms einer Windenergieanlage verstanden. Die vollständige oder teilweise Demontage eines Turms einer Windenergieanlage umfasst somit auch die vollständige oder teilweise Demontage des Fundaments.

Das hier beschriebene Verfahren zur Demontage eines Turms einer Windenergieanlage wird bevorzugt für einen Turm eingesetzt, der Betonfertigteile und/oder Ortbetonteile umfasst. Insbesondere kann der Turm durch extern und/oder intern geführte Spannglieder vorgespannt sein. Benachbarte Turmsegmente können vorzugsweise ganz oder teilweise stoffschlüssig und/oder formschlüssig und/oder kraftschlüssig verbunden sein. Die Verbindung von benachbarten Turmsegmenten an horizontalen Schnittstellen kann sich von der Verbindung benachbarter Turmsegmente an vertikalen Schnittstellen unterscheiden.

Als Betontürme für Windenergieanlagen werden insbesondere Türme bezeichnet, die zu einem großen Teil aus Betonfertigteilen und/oder Ortbetonteilen bestehen. In der Regel ist ein Betonturm aus Segmenten zusammengesetzt. Bei den Segmenten kann es sich insbesondere um ringförmige Segmente handeln, die übereinander gestapelt sind und an horizontalen Schnittstellen aneinandergrenzen. Insbesondere im unteren Teil eines Betonturms sind solche Ringsegmenten vorzugsweise aus Teilsegmenten aufgebaut, die erst vor Ort auf der Baustelle an vertikalen Schnittstellen zu einem Ring zusammengesetzt werden. Diese Teilsegmente sind an ihren vertikalen Schnittstellen beispielsweise über bewehrte Vergussmörtelfugen oder Schraubverbindungen, die in vorzugsweise vorgefertigten Schraubkästen eingesetzt sind (wie beispielsweise in der Anmeldung DE102016106526.9 beschrieben) miteinander verbunden. Die Teilung von Ringsegmenten in Teilsegmente ist meist aufgrund von Beschränkungen der Transportgröße von Ringsegmenten erforderlich. Auf das obere Ende eines Betonturms können je nach Turmvariante auch noch ein oder mehrere Stahlsektionen aufgesetzt werden.

Die Verbindung der Ringsegmente an ihren horizontalen Schnittstellen erfolgt beispielsweise, indem diese miteinander stoffschlüssig verbunden, beispielsweise verklebt, werden oder trocken übereinandergesetzt werden, was auch als Systemfuge bezeichnet werden kann. Zusätzlich werden die übereinander gestapelten Ringsegmente vorzugsweise in senkrechter Richtung mittels Spanngliedern vorgespannt oder verspannt. Diese Spannglieder verlaufen in der Regel entweder innerhalb der Betonsegmente in vergossenen Hüllrohren (sogenannte intern geführte Spannglieder) oder an der Innenseite des Turms (sogenannte extern geführte Spannglieder). Die Verbindung der Ringsegmente untereinander und auch der ein Ringsegment bildenden Teilsegmente untereinander sowie die Führung der Spannglieder intern oder extern hat Auswirkungen auf die zur Demontage des Turms geeigneten Maßnahmen.

Vorzugsweise ist das hier beschriebene Verfahren einsetzbar an einem oder mehreren der folgenden Standorte von Windenergieanlagen: freier Standort, beispielsweise Wiesen oder Felder; Waldstandort mit begrenztem Platzangebot; Deichstandort; Standort mit Versorgungsleitungen, wie z.B. Gasleitungen, in unmittelbarer Nähe; Standort mit Einschränkungen durch Nutzungsversagen von Nachbargrundstücken; Naturschutzgebiet; Trinkwasserschutzgebiet; Standort mit angrenzender Bebauung; wassernaher Standort, z.B. mit Gräben, Wasserläufe, Seen in unmittelbarer Umgebung; alpiner Standort.

Ferner vorzugsweise ist das Verfahren gekennzeichnet durch Entfernen von Einbauteilen im Turminneren, und/oder Installieren einer Arbeitsplattform im Turminneren und/oder außerhalb des Turms, insbesondere unter Nutzung von Befestigungspunkten, die vorzugsweise auch bereits für die Montage genutzt wurden und/oder an z.B. durch Kernbohrungen neu hergestellten Befestigungspunkten; und/oder Trennen der Spannglieder; und/oder Trennen benachbarter Turmsegmente; und/oder Entfernen des oberen Turmsegments, insbesondere durch Anschlagen an einem Demontagekran und anschließendes Anheben, Verschwenken und Absetzen; und/oder Umlegen des Turms, vorzugsweise über einen Keilschnitt am Turmfuß sowie ggf. anschließender Sprengung; und/oder Zerkleinern von Turmsegmenten; und/oder Trennen der zerkleinerten Turmsegmente nach ihren Bestandteilen.

Sofern im eingangs beschriebenen Schritt des Vorbereitens der Demontage Einbauteile im Turminneren noch nicht ganz oder teilweise entfernt wurden, kann es bevorzugt sein, in einem weiteren Schritt Einbauteile im Turminneren ganz oder teilweise zu entfernen. Vorzugsweise werden alle Einbauteilen im Turminneren vor der Demontage des Turms entfernt, wobei vorzugsweise Blitzschutzeinrichtungen und/oder die Steigleiter aus Sicherheitsgründen erst mit dem Demontagefortschritt an dem jeweils als nächstes abzutrennenden Segment gelöst und entfernt werden.

Das Installieren einer oder mehrerer Arbeitsplattformen erfolgt vorzugsweise am jeweiligen, dem Demontagefortschritt angepassten, oberen Ende des (Rest-)Turms. Eine Arbeitsplattform kann sowohl im Turminneren als auch außerhalb des Turms, insbesondere an dessen äußeren Umfang, angeordnet sein. Für die Befestigung einer Arbeitsplattform werden vorzugsweise Befestigungspunkte verwendet, welche auch schon für die Montage benutzt wurden. Alternativ oder zusätzlich können neu hergestellte Befestigungspunkte verwendet werden, die beispielsweise durch Kernbohrungen hergestellt werden können.

Das Trennen von Spanngliedern kann, wie auch noch im Folgenden näher beschrieben wird, unterschiedliche Maßnahmen umfassen, je nachdem ob die Spannglieder intern oder extern geführt sind. Ein Trennen der Spannglieder ist bevorzugt, um die Vorspannung bzw. Verspannung des Betonturms entlang der Längsachse aufzuheben und somit die Demontage des Turms, insbesondere die Trennung benachbarter Turmsegmente, zu erleichtern.

Das Trennen benachbarter Turmsegmente kann unterschiedliche Maßnahmen umfassen, wie im Folgenden auch noch näher beschrieben wird, in Abhängigkeit davon, ob benachbarte Turmsegmente an ihren Schnittstellen beispielsweise stoffschlüssig verbunden sind oder es sich um eine trockene Systemfuge handelt.

Vorzugsweise wird ein jeweils oberes Turmsegment am (dem Demontagefortschritt entsprechenden) jeweiligen oberen Ende des Turms entfernt, wobei vorzugsweise ein solches oberes Turmsegment an einem Demontagekran angeschlagen, anschließend abgehoben, verschwenkt und dann beispielsweise auf dem Boden im Umfeld der Windenergieanlage abgesetzt wird. Dieser Schritt ist insbesondere bevorzugt, wenn die Demontage des Turms das Demontieren einzelner, gegebenenfalls beschädigter, jedoch noch als Bauteil vorhandenen Turmsegmente umfasst.

Das Untersuchen und gegebenenfalls Entfernen von Beschichtungen, insbesondere umweltbelastenden Beschichtungen, des Turms und/oder seiner Bauteile dient insbesondere dazu, sicherzustellen, dass durch die Demontage des Turms keine oder nur geringe, insbesondere unter Grenzwerten liegende, Emissionen entstehen.

Die Demontage des Turms kann auch das Umlegen des Turms beinhalten. Dies kann vorzugsweise über einen Keilschnitt am Turmfuß erfolgen. Hierbei wird der Turm vorzugsweise im Wesentlichen als Ganzes - zumindest als Teil oberhalb des Keilschnitts am Turmfuß - von der Vertikalen in die Horizontale umgelegt. Die weitere Demontage des umgelegten Turms erfolgt dann am Boden bzw. im Bodennähe. Beispielsweise kann ein so umgelegter Turm anschließend gesprengt werden oder anderweitig zerkleinert und abtransportiert werden.

Die Turmsegmente des Turms werden vorzugsweise zerkleinert und ferner vorzugsweise nach ihren Bestandteilen getrennt, um eine Wiederverwertung, ein Recycling und/oder eine Entsorgung zu ermöglichen. Das Zerkleinern von Turmsegmenten kann erfolgen noch während die Turmsegmente den Turm bilden, beispielsweise indem mittels eines Abbruchwerkzeugs die Turmsegmente von oben nach unten am bestehenden Turm nach und nach zerkleinert werden. Das Zerkleinern von Turmsegmenten kann auch an Boden erfolgen, beispielsweise nachdem ganze Turmsegmente vom Turm entfernt und auf dem Boden platziert wurden.

Gemäß einer bevorzugten Ausführungsform des Verfahrens ist vorgesehen, dass das Trennen der Spannglieder umfasst: Trennen von intern geführten Spanngliedern mittels eines thermischen Verfahrens und/oder einer Sauerstofflanze und/oder eines Hochdruckwasserstrahls

Hierbei kann beispielsweise ein thermisches Trennen der Spannglieder, insbesondere mit Sauerstofflanzen, erfolgen. Beim thermischen Trennen mittels Sauerstofflanzen (die auch als Sauerstoff-Kernlanzen bezeichnet werden können) wird vorzugsweise das Eisen der Sauerstofflanze in Form von Mantelrohr und Kerndrähten an der Lanzenspitze verbrannt. Dabei wird ferner vorzugsweise unter Druck ein Reinsauerstoffstrom durch die Lanze zugeführt, sodass Arbeitstemperaturen zwischen 2000 °C und 2500 °C entstehen können. Bei diesen Temperaturen können metallische und mineralische Werkstoffe zum Schmelzen gebracht werden.

Vorzugsweise kann ein Brennbohren in mineralischen und metallischen Werkstoffen durchgeführt werden, wobei kein fortschreitender Schneidevorgang erfolgt, sondern vielmehr mehrere aneinandergereihte Bohrungen eine Trennperformation darstellen. Vorzugsweise werden mit den Brennbohrungen die einzelnen Spannglieder vollständig oder zumindest zu einem Großteil durchtrennt. Die Stege, die bei dem Trennverfahren verbleiben, weisen insbesondere bei mineralischen Werkstoffen meist eine spröde Glasstruktur auf und sind leicht trennbar.

Nach einem solchen Trennen von intern geführten Spanngliedern und einer entsprechenden Schwächung des zwischen den beiden Bohrungen befindlichen Materials durch Versprödung ist der gesamte Querschnitt somit geschwächt und vorzugsweise können die Turmsegmente anschließend beispielsweise mittels Spaltgeräten voneinander gelöst werden. Vorzugsweise kommt beim Trennen von intern geführten Spanngliedern eine seitliche Arbeitsbühne zum Einsatz, die am Turminneren oder außerhalb des Turms, insbesondere an dessen Außenumfang, angeordnet sein kann.

Gemäß einer weiteren bevorzugten Ausführungsform des Verfahrens ist vorgesehen, dass das Trennen der Spannglieder umfasst: Entspannen von extern geführten Spanngliedern; und/oder Trennen von extern geführten Spanngliedern, insbesondere am Turmkopf oder am Turmfuß; und/oder Abziehen und ggf. Aufwickeln von extern geführten Spannglieder, insbesondere mittels eines Auftrommelgeräts.

Bei extern geführten Spanngliedern ist es bevorzugt, dass diese vor dem Trennen entspannt werden. Dies hat den Vorteil, dass ein unkontrolliertes Ausschlagen der Spannglieder nach dem Trennen vermieden oder zumindest reduziert werden kann. Zum Entspannen von extern geführten Spanngliedern kann beispielsweise eine Lösung eingesetzt werden, die in der Anmeldung Anmeldungen DE 10 2019 102 688.1 beschrieben ist. Ferner ist es bevorzugt, dass das Trennen von extern geführten Spanngliedern unter erhöhter Arbeitssicherheit erfolgt, unabhängig davon, ob die Spannglieder zuvor entspannt wurden oder nicht. Eine Lösung mit erhöhter Arbeitssicherheit zum Trennen von extern geführten Spanngliedern ist beispielsweise in der Anmeldung DE 10 2019 116 840.6 beschrieben.

Nach dem Trennen von extern geführten Spanngliedern kann es bevorzugt sein, diese abzuziehen und gegebenenfalls auf zu wickeln. Das Abziehen kann insbesondere nach oben, zum Turmkopf hin, oder nach unten, zum Turmfuß hin, erfolgen. Zum Aufwickeln der Spannglieder kommt vorzugsweise ein Auftrommelgerät zum Einsatz. Als ein solches Auftrommelgerät kann beispielsweise ein Spanngliedablassgerät zum Einsatz kommen, mit welchem bei der Errichtung des Turms die Spannglieder von oberhalb des Turmkopfes bis an den Turmfuß herabgelassen werden. Ein solches Spanngliedablassgerät dient der Aufnahme und den Transport von Spanngliedtrommeln und umfasst in der Regel einen Geräterahmen, einen Schaltschrank und einen Antrieb. Das Aufwickeln der extern geführten Spannglieder mittels eines solchen Auftrommelgeräts hat den Vorteil, dass die Spannglieder damit kompakt verstaut sind und einfach transportiert werden können.

Gemäß einer weiteren bevorzugten Ausführungsform ist vorgesehen, dass das Trennen benachbarter Turmsegmente, insbesondere an horizontalen Fugen, erfolgt unter Verwendung einer Betonwandsäge und/oder einer Blattsäge und/oder einer Seilsäge und/oder einer Sauerstofflanze und/oder eines Hochdruckwasserstrahls und/oder eines, insbesondere hydraulischen, Spaltgeräts.

Das Trennen benachbarter Turmsegmente ist insbesondere dann von Bedeutung, wenn benachbarte Turmsegmente, insbesondere an horizontalen und/oder vertikalen Fugen, ganz oder teilweise stoffschlüssig und/oder formschlüssig und/oder kraftschlüssig verbunden sind. Das Trennen benachbarter Turmsegmente ist insbesondere dann bevorzugt, wenn nach dem Trennen der Spannglieder ein Abheben und Entfernen von ganzen Turmsegmenten erfolgen soll.

Sofern eine formschlüssige Verbindung lediglich aus einer Stoß- oder Aufsetzverbindung besteht, die - gegebenenfalls nach Trennen der Spannglieder - durch einfaches Abheben des oberen Turmsegments nach oben gelöst werden kann, ist in der Regel auch das Trennen solcher benachbarter Turmsegmente bereits mit dem Abheben des einen Turmsegments vom anderen erfolgt. Insbesondere bei stoffschlüssigen und/oder kraftschlüssigen Verbindungen können weitere Maßnahmen erforderlich sein. Hierzu können insbesondere die oben genannten Werkzeuge eingesetzt werden, um diese Verbindungen zwischen den benachbarten Turmsegmenten aufzuheben, insbesondere indem entlang von Fugen Material durchtrennt oder anderweitig geschwächt wird. Das Trennen benachbarter Turmsegmente kann dabei an Fugen erfolgen, die bei der Montage von beispielsweise Betonfertigteilen gestanden sind. Das Trennen benachbarter Turmsegmente kann aber auch an beliebigen anderen Stellen erfolgen und beispielsweise auch ursprünglich als Betonfertigteile vorgesehene Bauteile durchtrennen.

Beim Hochdruckwasserstrahlschneiden beispielsweise kommt bevorzugt Wasser mit Beimischung von Abrasivstoffen als Strahlmittel zum Einsatz. Dieses wird vorzugsweise durch eine Hochdruckpumpe beschleunigt, über eine oder mehrere spezielle Strahldüse geführt und auf die zu durchdringende Oberfläche gerichtet. Vorzugsweise werden dabei Drücke von bis zu 4000 bar erreicht. Durch die hohe Aufprallenergie kann das Material an der Bauteiloberfläche abgetragen werden, wobei das gelöste Material vorzugsweise zusammen mit dem Strahlmittel abfließt. Der Einsatz von Abrasivstoffen erhöht dabei vorzugsweise die Schneidwirkung. Hierbei kommt vorzugsweise eine Arbeitsplattform zum Einsatz. Während des Trennens werden die Fugen zwischen benachbarten Turmsegmenten vorzugsweise mit Stahl- oder Holzkeilen gegen ungewolltes Absenken der Segmente gesichert.

Eine vorzugsweise hydraulisch gesteuerte Betonwandsäge und vorzugsweise eine Führungsschiene können beispielsweise zur Trennung des obersten Betonsegments eines Turms und dem noch darüber liegenden, beispielsweise mitverspannten, Stahlsegment erfolgen, was insbesondere wegen der hohen Genauigkeit, die mit einer Betonwandsäge erzielbar ist, bevorzugt ist.

Zum Trennen benachbarter Betonsegmente voneinander kann sowohl eine Blattsäge als eine Seilsäge zum Einsatz kommen, wobei insbesondere der Einsatz einer Blattsäge wegen ihrer höheren Genauigkeit bevorzugt ist. Ferner ist die Schnittgeschwindigkeit bei einer Blattsäge relativ hoch. Allerdings ist die Rüstzeit für das häufige Umsetzen der Führungsschienen und der Blattsäge hoch.

Die Seilsäge wiederum hat zwar eine niedrigere Schnittgeschwindigkeit und eine geringere Genauigkeit als die Blattsäge, hat dafür aber einen geringeren personellen Aufwand und kann bei Bedarf auch ohne Arbeitsplattform, beispielsweise vom Arbeitskorb eines Krans aus, montiert werden. Eine Seilsäge wird vorzugsweise an einer Seite des Turms befestigt. Das Seil ist vorzugsweise ein mit Diamantsplittern versetztes Sägeseil, welches insbesondere komplett um den Turm gelegt wird und sich durch Zug in den Beton einschneidet.

Gemäß einer weiteren bevorzugten Ausführungsform ist bevorzugt, dass das Trennen benachbarter Turmsegmente, insbesondere an vertikalen Fugen, erfolgt durch Trennen von Schraubverbindungen, insbesondere durch zerstörendes oder zerstörungsfreies Trennen. Insbesondere wenn benachbarte Turmsegmente, beispielsweise an vertikalen oder horizontalen Fugen, mit Schraubverbindungen verbunden sind, kann das Trennen solcher benachbarter Turmsegmente vorzugsweise durch das Trennen von Schraubverbindungen erfolgen. Eine zerstörungsfreie Trennung kann dabei durch Lösen bzw. Aufschrauben der Schraubverbindung erfolgen. Auch eine zerstörende Trennung solcher benachbarter Turmsegmente ist möglich, beispielsweise durch Trennen der Schraubverbindungen mit Sägen und/oder Sauerstofflanzen und/oder anderen, in der Regel für eine Trennung von Metall geeigneten, Werkzeugen und/oder Verfahren.

Gemäß einer weiteren bevorzugten Ausführungsform erfolgt das Zerkleinern von Turmsegmenten erfolgt mittels Sprengung. Das Zerkleinern von Turmsegmenten kann auch erfolgen mittels einem bodengebundenen Abbruchwerkzeug. Ein bodengebundenes Abbruchwerkzeug kann beispielsweise sein ein Abbruchbagger, insbesondere mit longfront, eine Prallkugel, die auch als Abrissbirne bezeichnet werden kann, ein Seilbagger, oder eine Abbruchschere. Vorzugsweise kann eine Abbruchschere, die auch als Knabberschaufel bezeichnet werden kann, in Kombination mit einem Abbruchbagger oder einem Seilbagger zum Einsatz kommen. Das Zerkleinern von Turmsegmenten kann auch erfolgen mittels einem turmgebundenen Abbruchwerkzeug. Ein turmgebundenes Abbruchwerkzeug kann beispielsweise sein ein Aufsetzbagger, ein Spinnenbagger, oder eine Abbruchschere. Vorzugsweise kann eine Abbruchschere in Kombination mit einem Aufsetzbagger oder einem Spinnenbagger zum Einsatz kommen.

Das Zerkleinern von Turmsegmenten kann erfolgen nachdem die Turmsegmente bereits voneinander getrennt wurden oder noch während zwei oder mehrere oder alle Turmsegmente verbunden sind. Beispielsweise kann die Zerkleinerung von Turmsegmenten mittels Sprengung erfolgen, wenn alle Turmsegmente oder ein Großteil der Turmsegmente eines Turms noch miteinander verbunden sind, beispielsweise noch als stehender Turm oder als umgelegter Turm.

Das Zerkleinern von Turmsegmenten mittels bodengebundener Abbruchwerkzeuge kann eingesetzt werden sowohl für noch miteinander verbundene Turmsegmente als auch bereits voneinander getrennte Turmsegmente. Bei der Verwendung eines Abbruchbaggers, insbesondere mit einer sogenannten longfront, bei der an einem Teleskoparm eine Abbruchschere befestigt ist, werden in der Regel bis zur Arbeitshöhe des Abbruchbaggers kein Kran und auch keine Arbeitsplattformen benötigt. Vorzugsweise zerkleinert eine Abbruchschere den Beton und durchschneidet die Bewehrung. Die zerkleinerten Bestandteile fallen in der Regel innen und/oder außen am Turm herunter, sodass der Bereich um den Turm aus Sicherheitsgründen großräumig abzusperren ist. Gegebenenfalls können mit einer Abbruchschere auch Spannglieder, insbesondere intern geführte Spannglieder, durchtrennt werden.

Auch beim Einsatz eines Seilbaggers sind bis zur Arbeitshöhe des Seilbaggers kein Kran und auch keine Arbeitsbühnen erforderlich. Bei einem Seilbagger ist meist mit einem Gittermast über eine Hakenflasche eine Abbruchschere befestigt. Die für die Abbruchschere in der Regel erforderlichen Hydraulikverbindungen können beispielsweise über den Gittermast bis zur Abbruchschere geführt werden. Im Gegensatz zu einer an einer longfront eines Abbruchbaggers befestigten Abbruchschere lässt sich die Abbruchschere eines Seilbaggers ist nicht so präzise steuern, wodurch sich höhere Abbruchzeiten ergeben können. Allerdings sind bei einem Seilbagger in der Regel größere Abbruchhöhen möglich. Übliche Abbruchhöhen bei einem Abbruchbagger mit longfront sind beispielsweise ca. 45 m, wobei mit einem Seilbagger Abbruchhöhen von ca. 70 m möglich sein können. Auch beim Einsatz eines Seilbaggers ist eine großzügige Absperrung um den Turm erforderlich.

Bei der Verwendung einer Prallkugel wird in der Regel mit einem Gittermastkran eine Prallkugel am Kranhaken abgehängt und durch ein zweites Seil horizontal ausgelenkt, vorzugsweise in einem definierten Winkel, um dann gegen den Turm zu prallen. Aufgrund des hohen Gewichts der Prallkugel löst sich der Beton von der Bewährung und wird Stück für Stück aus dem Turm herausgebrochen. Hierdurch können beispielsweise etwa 8 bis 10 m lange Betonturmstücke zum Kippen gebracht werden. Mit diesem Vorgehen sind Abbruchhöhen von ca. 90 m erreichbar. Es handelt sich hierbei um eine besonders effektive und kostengünstige Lösung, wobei auch hier eine großräumige Absperrung des Turms erforderlich ist.

Beim Einsatz von turmgebundenen Abbruchwerkzeugen ist es in der Regel bevorzugt, wenn die Turmsegmente noch den Turm bilden und am oberen Ende des Turms ein Abbruchwerkzeug platziert wird. Dieses zerkleinert die Turmsegmente an Ort und Stelle von oben nach unten sukzessive, wobei sich das turmgebundene Abbruchwerkzeug vorzugsweise mit fortschreitender Turmdemontage (und damit weiter nach unten fortschreitenden oberen Turmende) nach unten bewegt. Dies hat den Vorteil, dass auf einen Kran oder Arbeitsplattformen in der Regel verzichtet werden kann. Weiterhin kann hierbei die Staub- und/oder Lärmbelästigung im Gegensatz von Demontagemaßnahmen mit Sprengung oder dem Einsatz von Sägen geringer sein.

Hierbei ist es bevorzugt, dass das turmgebundene Abbruchwerkzeug dem Turm entlang seiner vertikalen Achse folgen kann, vorzugsweise selbsttätig. Hierzu weist das turmgebundene Abbruchwerkzeug vorzugsweise Vorrichtungen auf, um selbsttätig an den zumeist konisch zulaufenden Türmen befestigt zu werden und, insbesondere mit oder ohne Zuhilfenahme eines Krans, das obere Turmende erreichen kann. Diese Bewegung entlang der vertikalen Achse, zunächst von unten nach oben, kann beispielsweise durch verschiedene Verfahren erreicht werden, etwa mittels zweier oder mehrerer, um den Umfang des Turms gelegten Ketten oder Seile, welche mittels einer Vorrichtung um den Umfang gespannt werden und wechselseitig gelöst und in der vertikalen Achse verfahren werden. Durch eine solche wechselseitige Verspannung hält sich das turmgebundene Abbruchwerkzeug vorzugsweise mittels Reib- und/oder Formschluss (insbesondere aufgrund der konischen Bauform des Turms) an dem bestehenden Turm auf Position und durch die in der vertikalen Achse verfahrbare zweite Spannvorrichtung kann sich das turmgebundene Abbruchwerkzeug am Turm nach oben bewegen. Es kann ferner bevorzugt sein, die Vertikalbewegung zu realisieren mittels einer Lagerung auf oder an dem Turm in Verbindung mit entsprechend mit Anpressdruck beaufschlagen und der Kontur des Turms folgenden Antrieben. Die Lagerung umgreift dabei vorzugsweise den Umfang zu mehr als 180°. Ein turmgebundenes Abbruchwerkzeug bewegt sich somit vorzugsweise zu Beginn der Demontagearbeiten bis an den oberen Rand des Turms und beginnt von dort abwärts, die Turmsegmente beispielsweise mittels einer Abbruchschere oder Abbruchhammer zu zerkleinern. Die Steuerung eines turmgebundenen Abbruchwerkzeugs erfolgt vorzugsweise mittels sicherer Datenverbindung aus der Distanz von einem Anlagenbediener am Boden.

Weitere vorteilhafte Ausführungsvarianten des zuvor beschriebenen Verfahrens ergeben sich durch Kombination der hier erörterten bevorzugten Merkmale.

Bevorzugte Ausführungsbeispiele werden beispielhaft anhand der beiliegenden Figuren beschrieben. Es zeigen:
- Figur 1:: eine schematische Darstellung einer beispielhaften Windenergieanlage;
- Figur 2:: ein schematisches Ablaufdiagramm einer beispielhaften Ausführungsform eines Verfahrens zur Demontage eines Turms einer Windenergieanlage;
- Figur 3:: ein schematisches Ablaufdiagramm einer weiteren beispielhaften Ausführungsform von Schritten eines Verfahrens zur Demontage eines Turms einer Windenergieanlage;
- Figur 4:: ein schematisches Ablaufdiagramm einer weiteren beispielhaften Ausführungsform von Schritten eines Verfahrens zur Demontage eines Turms einer Windenergieanlage;
- Figur 5:: ein schematisches Ablaufdiagramm einer weiteren beispielhaften Ausführungsform von Schritten eines Verfahrens zur Demontage eines Turms einer Windenergieanlage;
- Figur 6:: ein schematisches Ablaufdiagramm einer weiteren beispielhaften Ausführungsform von Schritten eines Verfahrens zur Demontage eines Turms einer Windenergieanlage;
- Figur 7:: ein schematisches Ablaufdiagramm einer weiteren beispielhaften Ausführungsform von Schritten eines Verfahrens zur Demontage eines Turms einer Windenergieanlage;
- Figur 8:: ein schematisches Ablaufdiagramm einer weiteren beispielhaften Ausführungsform von Schritten eines Verfahrens zur Demontage eines Turms einer Windenergieanlage;
- Figur 9:: ein schematisches Ablaufdiagramm einer weiteren beispielhaften Ausführungsform von Schritten eines Verfahrens zur Demontage eines Turms einer Windenergieanlage;
- Figur 10:: ein schematisches Ablaufdiagramm einer weiteren beispielhaften Ausführungsform von Schritten eines Verfahrens zur Demontage eines Turms einer Windenergieanlage;
- Figur 11:: ein schematisches Ablaufdiagramm einer weiteren beispielhaften Ausführungsform von Schritten eines Verfahrens zur Demontage eines Turms einer Windenergieanlage;
- Figur 12:: ein schematisches Ablaufdiagramm einer weiteren beispielhaften Ausführungsform von Schritten eines Verfahrens zur Demontage eines Turms einer Windenergieanlage;
- Figur 13:: eine schematische dreidimensionale Ansicht eines Turms einer Windenergieanlage mit einer beispielhaften an der Außenseite angeordneten Arbeitsplattform;
- Figur 14:: eine schematische dreidimensionale Ansicht eines Turms einer Windenergieanlage mit beispielhaften Führungsschienen für eine Betonwandsäge;
- Figur 15:: eine schematische dreidimensionale Ansicht eines Turms einer Windenergieanlage mit einer beispielhaften Betonwandsäge;
- Figur 16:: eine schematische dreidimensionale Ansicht eines Turms einer Windenergieanlage mit einer beispielhaften Seilsäge;
- Figur 17:: eine schematische dreidimensionale Ansicht eines beispielhaften Turms einer Windenergieanlage mit abgehobenem obersten Turmsegment;
- Figur 18:: eine schematische dreidimensionale Ansicht eines Turms einer Windenergieanlage mit einem beispielhaften Auftrommelgerät;
- Figur 19:: eine schematische dreidimensionale Ansicht eines beispielhaften Auftrommelgeräts;
- Figur 20:: eine schematische dreidimensionale Ansicht eines Turms einer Windenergieanlage mit beispielhaftem Abbruchbagger mit longfront;
- Figur 21:: eine schematische dreidimensionale Ansicht einer beispielhaften Abbruchschere;
- Figur 22:: eine schematische dreidimensionale Ansicht eines beispielhaften Fallbetts mit Sandrippen;
- Figur 23:: eine schematische dreidimensionale Ansicht eines beispielhaften Turmfußes mit Keilschnitt;
- Figur 24:: eine schematische dreidimensionale Ansicht eines beispielhaften Turms beim Umlegen;
- Figur 25:: eine schematische dreidimensionale Ansicht eines beispielhaften umgelegten Turms;
- Figur 26:: eine schematische dreidimensionale Ansicht eines beispielhaften Turms einer Windenergieanlage beim Abbruch mit Prallkugel;
- Figur 27:: eine schematische dreidimensionale Ansicht des oberen Endes eines Turms mit einem beispielhaften Aufsetz- bzw. Spinnenbagger;
- Figur 28:: eine schematische Schnittdarstellung eines beispielhaften Düsensystems beim Hochdruckwasserstrahlschneiden mit Abrasivstoffen;
- Figur 29:: eine schematische dreidimensionale Ansicht des oberen Endes eines Turms mit einem weiteren beispielhaften Aufsetz- bzw. Spinnenbagger;
- Figur 30:: einen schematischen Längsschnitt eines Turms mit einem beispielhaften turmgebundenen Abbruchwerkzeug;
- Figur 31:: eine schematische Schnittdarstellung eines Turms mit einem weiteren beispielhaften turmgebundenen Abbruchwerkzeug;
- Figur 32:: eine schematische Schnittdarstellung eines Turms mit einem weiteren beispielhaften turmgebundenen Abbruchwerkzeug;
- Figur 33:: eine schematische dreidimensionale Ansicht des oberen Endes eines Turms beim Einsatz einer beispielhaften Sauerstofflanze;
- Figur 34:: eine schematische Schnittdarstellung einer beispielhaften Trennperforation;
- Figur 35:: eine schematische dreidimensionale Ansicht eines beispielhaften Spaltgeräts; und

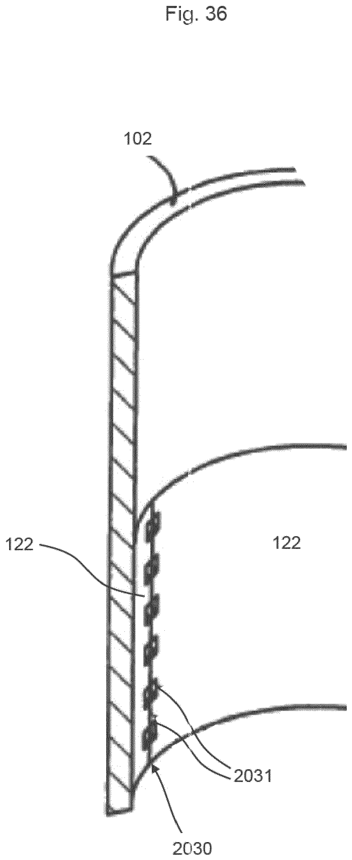

- Figur 36:: eine schematische dreidimensionale Ansicht einer beispielhaften Ausführung eines Turmsegments mit Teilsegmenten und vertikaler Fuge.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind

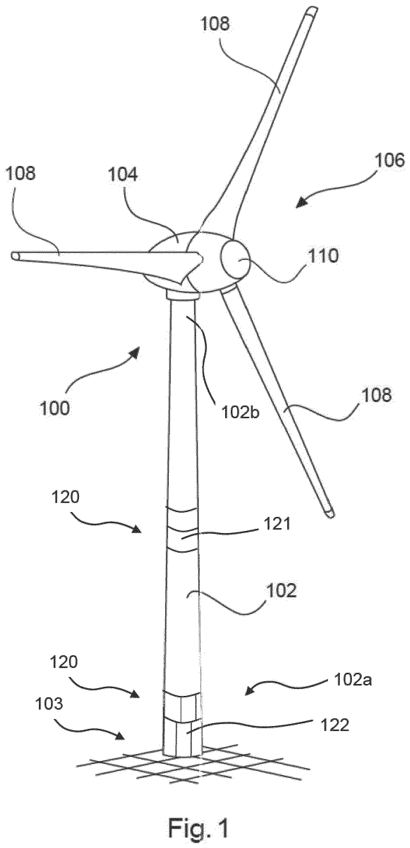

Fig. 1 zeigt eine schematische Darstellung einer Windenergieanlage mit einem Turm zur Demontage gemäß der Erfindung. Die Windenergieanlage 100 weist einen auf einem Fundament 103 angeordneten Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Der Turm 102 weisen ein unteres Ende 102a und ein oberes Ende 102b auf. Der Turm 102 umfasst eine Vielzahl von Turmsegmenten 120, die Betonfertigteile oder Ortbetonbauteile sein können. Die Turmsegmente 120 sind zu einem Großteil als geschlossene Ringsegmente 121 ausgebildet, von denen in Figur 1 zwei schematisch angedeutet sind.

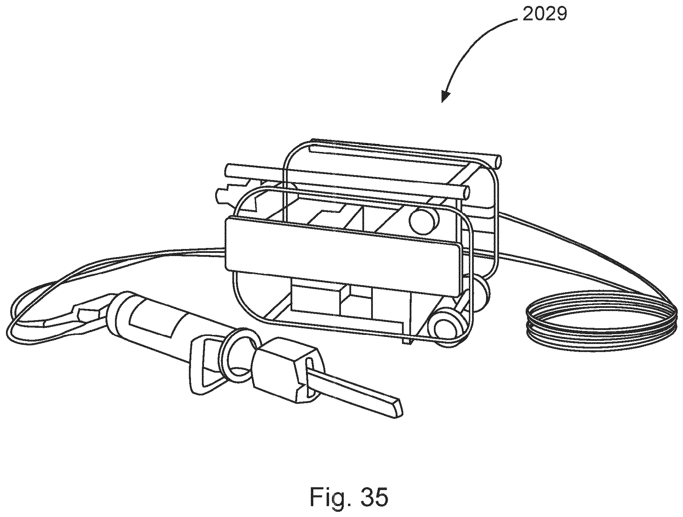

Im unteren Bereich des Turms 102 sind die einen Ring bildenden Turmsegmente 120 aus Teilsegmenten 122 zusammengesetzt, sodass sie neben den horizontalen Fugen zwischen übereinandergestapelten Ringsegmenten auch vertikale Fugen zwischen den Teilsegmenten 122 aufweisen. Eine solche vertikale Fuge 2030, bei der die Teilsegmente 122 mittels Schraubverbindungen über Schraubkästen 2031 verbunden sind, ist in Fig. 35 gezeigt.

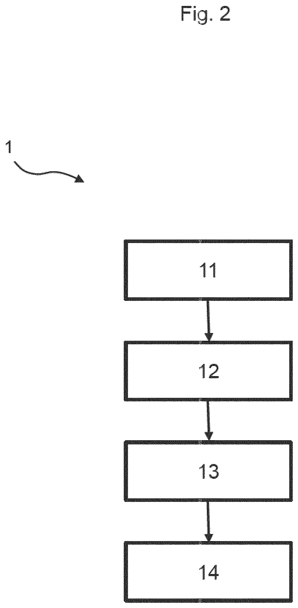

In Figur 2 ist ein schematisches Ablaufdiagramm einer beispielhaften Ausführungsform eines Verfahrens 1 zur Demontage eines Turms 102 einer Windenergieanlage 100 dargestellt. Das Verfahren 1 umfasst das Auswählen 11 geeigneter Demontage-Maßnahmen in Abhängigkeit des Turmstandorts und der Turmeigenschaften sowie das Vorbereiten 12 der Demontage, insbesondere des Turms 102 und gegebenenfalls der Umgebung. Die Demontage des Turms 102 wird im Schritt 13 durchgeführt. Anschließend wird der demontierte Turm in Schritt 14 abtransportiert. Insbesondere der Schritt der Durchführung 13 der Demontage des Turms 102 kann unterschiedlich gestaltet sein und hierzu enthalten auch die im Folgenden dargestellten weiteren beispielhaften Ausführungsformen nähere Informationen.

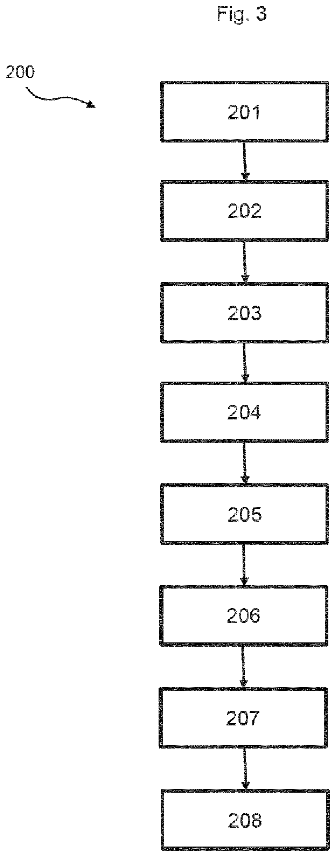

In Figur 3 ist ein schematisches Ablaufdiagramm einer weiteren beispielhaften Ausführungsform von Schritten eines Verfahrens 200 zur Demontage eines Turms 102 einer Windenergieanlage 100 dargestellt. In diesem Verfahren 200 ist die Turmdemontage der einzelnen Segmente mit einer Trennung der Turmsegmente 120 voneinander durch Sägeschnitte dargestellt.

Dieses Verfahren 200 kann insbesondere eingesetzt werden bei den folgenden Standortbedingungen: freier Standort, beispielsweise Wiesen oder Felder; Waldstandort mit begrenztem Platzangebot; Deichstandort; Standort mit Versorgungsleitungen, wie z.B. Gasleitungen, in unmittelbarer Nähe; Standort mit Einschränkungen durch Nutzungsversagen von Nachbargrundstücken; Naturschutzgebiet; Trinkwasserschutzgebiet; Standort mit angrenzender Bebauung; wassernaher Standort, z.B. mit Gräben, Wasserläufe, Seen in unmittelbarer Umgebung; alpiner Standort. Ferner kann dieses Verfahren 200 insbesondere eingesetzt werden bei Türmen der folgenden Art: Ortbetonturm, Fertigteilbetonturm mit intern geführten Spanngliedern und mit stoffschlüssig verbundenen, insbesondere geklebten, Fugen, Fertigteilbetonturm mit intern geführten Spanngliedern und trockenen Fugen, insbesondere Systemfugen, Fertigteilbetonturm mit extern geführten Spanngliedern und mit stoffschlüssig verbundenen, insbesondere geklebten, Fugen.

Im Schritt 201 werden vor der Demontage zunächst alle Einbauteile im Turminneren entfernt, wobei die Blitzschutzeinrichtungen und die Steigleiter aus Sicherheitsgründen erst mit dem Demontagefortschritt an dem jeweils abzutrennenden Segment gelöst werden.

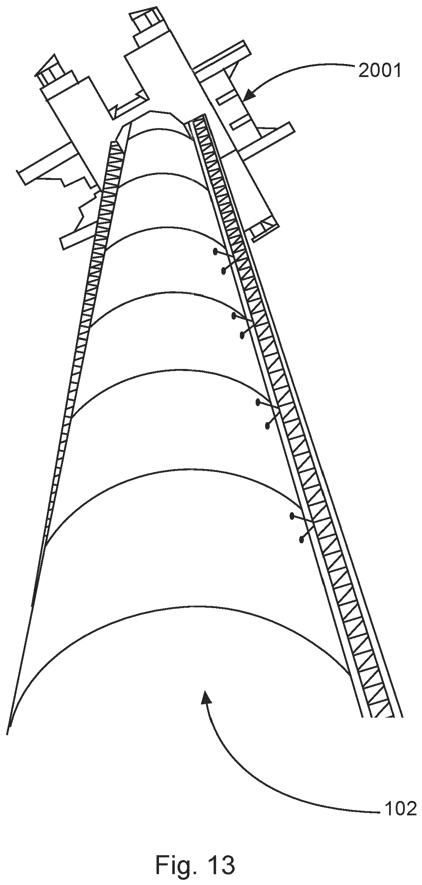

Im Schritt 202 wird am Turm 102 eine Arbeitsplattform angeordnet. Diese kann sowohl im Turminneren als auch an der Außenseite des Turms angeordnet sein. Eine an der Außenseite des Turms 102 angeordnete Arbeitsplattform 2001 ist in Fig. 13 dargestellt.

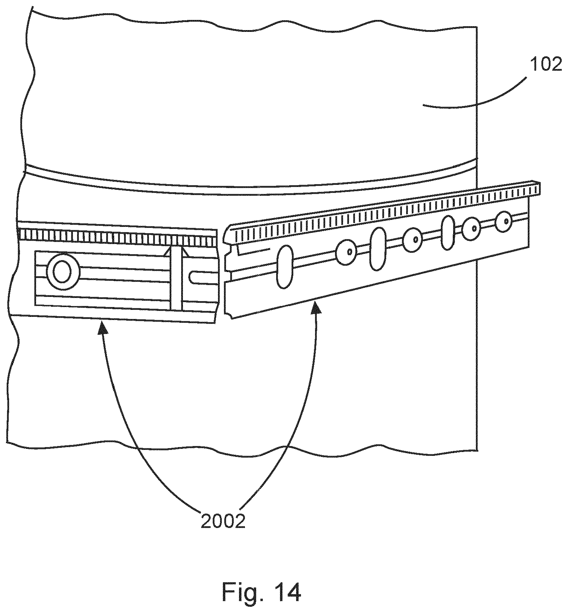

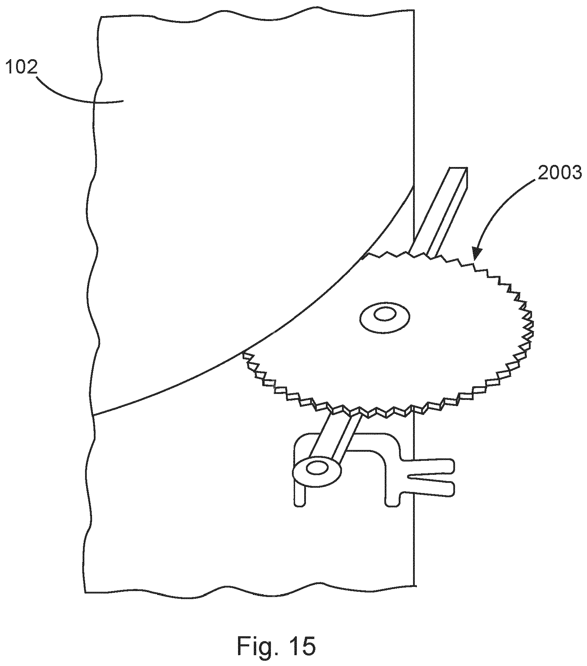

Im Schritt 203 wird für den Schnitt zwischen einem oberen mitverspannten Stahlsegment und dem obersten Betonsegment eine über am Segment verschraubte Führungsschienen 2002 geführte Betonwandsäge 2003 (vgl. Fig. 14, 15) im Bereich der horizontalen Schnittfuge angesetzt und das Stahlsegment vom obersten Betonsegment getrennt. Während des Trennens werden die Schnittfugen mit Stahl- oder Holzkeilen gegen ungewolltes Absenken der Segmente gesichert.

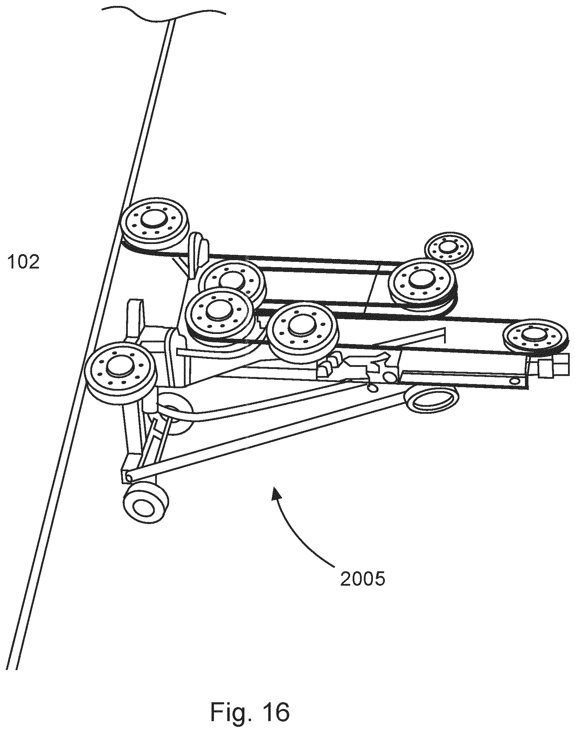

Im Schritt 204 wird eine Blattsäge oder eine Seilsäge 2005 (vgl. Fig. 16) für die Schnitte zwischen den nachfolgenden Betonsegmenten 120 an einer Seite des Turms 102 befestigt und im Schritt 205 und eine Schnittfuge zwischen zwei benachbarten Segmenten 120 zu ca. 2/3 durchtrennt.

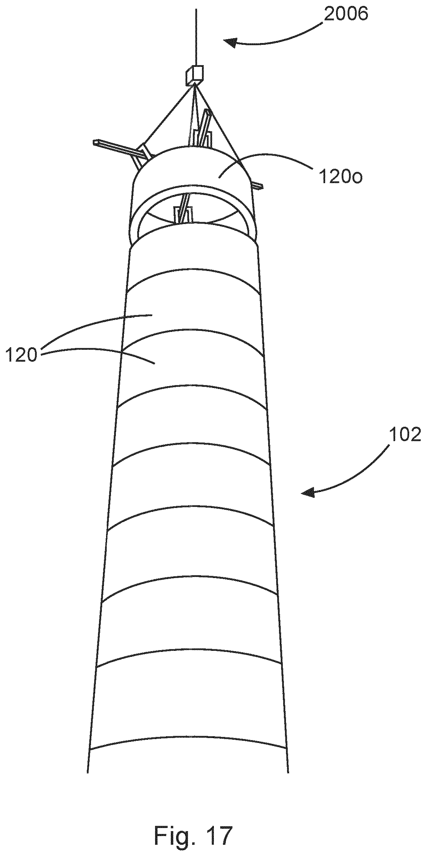

Im Schritt 206 wird das jeweils oberste Segment 120o dann an einem Demontagekran 2006 angeschlagen (wobei gegebenenfalls die Anschlagpunkte des abzuhebenden Segments freizulegen sind), wie in Fig. 17 dargestellt. Bei intern verspannten Spanngliedern wird vorzugsweise noch der Segmentkleber aus den Gewindehülsen entfernt und gegebenenfalls das Gewinde der Hülse nachgeschnitten.

Im Schritt 207 wird der Schnitt zwischen den beiden benachbarten Turmsegmenten 120 schließlich vollständig durchtrennt. Im Schritt 208 kann dann das abgetrennte obersten Segment 120 mittels Kran 2006 angehoben und beispielsweise auf einer Lagerfläche in Turmnähe abgestellt werden. Gegebenenfalls noch vorhandene Verbindungen zwischen Teilsegmenten 122 an vertikalen Schnittstellen können auch noch am Boden gelöst werden.

Die Schritte 205-208 werden entsprechend der Anzahl der zu demontierenden Segmente wiederholt.

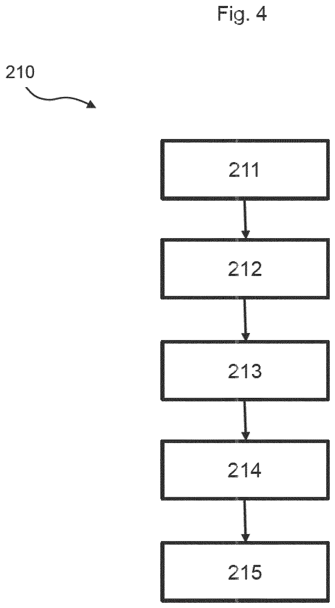

In Figur 4 ist ein schematisches Ablaufdiagramm einer weiteren beispielhaften Ausführungsform von Schritten eines Verfahrens 210 zur Demontage des Turms 102 Windenergieanlage 100 dargestellt. In diesem Verfahren 210 ist die Turmdemontage der einzelnen Segmente ohne Sägeschnitte zwischen den benachbarten Turmsegmenten 120 dargestellt. Dieses Verfahren 210 ist insbesondere dann bevorzugt anwendbar, wenn der Turm 102 über extern geführte Spannglieder und eine, insbesondere unverklebte, Systemfuge verfügt.

Dieses Verfahren 210 kann insbesondere eingesetzt werden bei den folgenden Standortbedingungen: freier Standort, beispielsweise Wiesen oder Felder; Waldstandort mit begrenztem Platzangebot; Deichstandort; Standort mit Versorgungsleitungen, wie z.B. Gasleitungen, in unmittelbarer Nähe; Standort mit Einschränkungen durch Nutzungsversagen von Nachbargrundstücken; Naturschutzgebiet; Trinkwasserschutzgebiet; Standort mit angrenzender Bebauung; wassernaher Standort, z.B. mit Gräben, Wasserläufe, Seen in unmittelbarer Umgebung; alpiner Standort. Ferner kann dieses Verfahren 210 insbesondere eingesetzt werden bei Fertigteilbetontürmen mit extern geführten Spanngliedern und mit trockenen Fugen, insbesondere Systemfugen.

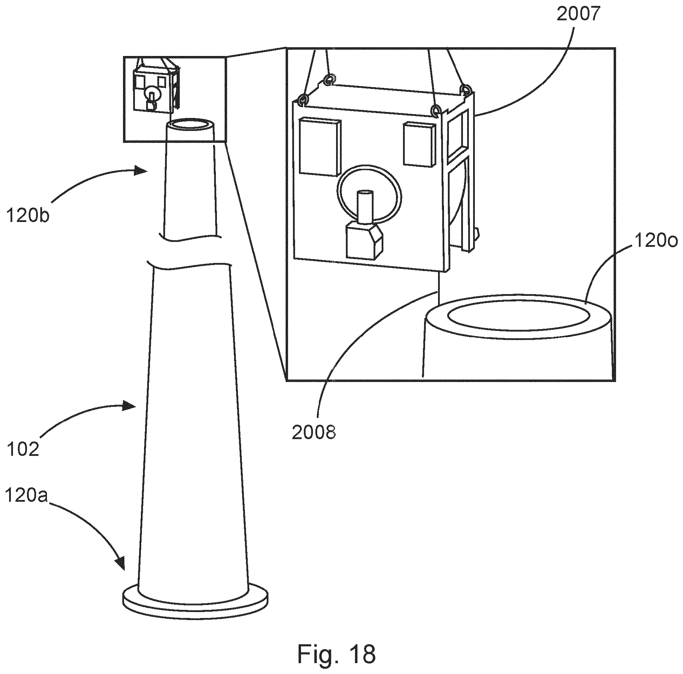

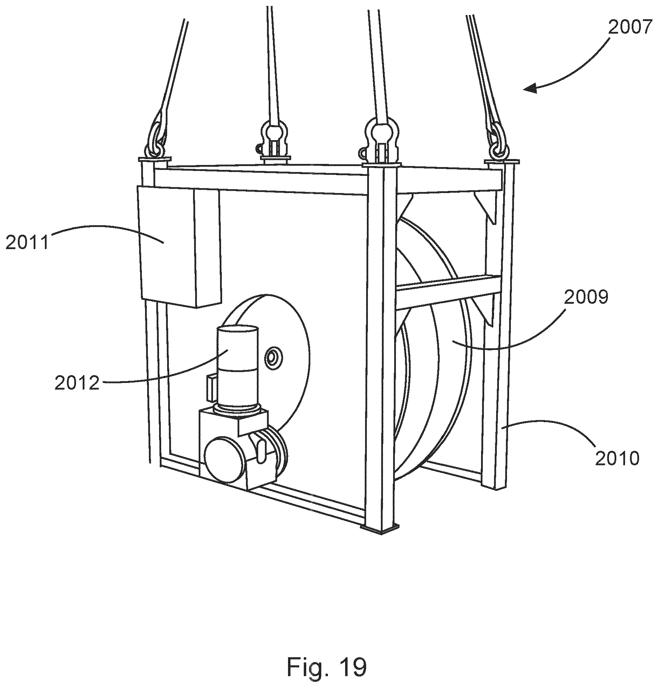

In einem ersten Schritt 211 werden die Spannglieder 2008 (vgl. Fig. 18) im Bereich des Turmfußes 102a getrennt, gegebenenfalls nach vorheriger Entspannung, und vorzugsweise durch das obere Ende 102b des Turms 102 herausgezogen und beispielsweise mit einem in den Figur 18 und 19 dargestellten Auftrommelgerät 2007 aufgewickelt. Das Auftrommelgerät 2007 ist als Spanngliedablassgerät ausgebildet, mit welchem bei der Errichtung des Turms 102 die Spannglieder 2008 von oberhalb des Turmkopfes 102b bis an den Turmfuß 102a herabgelassen werden. Ein solches Spanngliedablassgerät 2007 dient der Aufnahme und den Transport von Spanngliedtrommeln 2009 und umfasst einen Geräterahmen 2010, einen Schaltschrank 2011 und einen Antrieb 2012. Das Aufwickeln der extern geführten Spannglieder 2008 mittels eines solchen Auftrommelgeräts 2007 hat den Vorteil, dass die Spannglieder 2008 damit kompakt verstaut sind und einfach transportiert werden können

Falls erforderlich, kann auch eine Arbeitsplattform 2001 im Turminneren oder der Außenseite des Turms 102 angeordnet werden.

Im nächsten Schritt 212 wird dann das jeweils oberste Turmsegment 120o an einem Demontagekran 2006 angeschlagen, angehoben und abgenommen. Dieser Schritt wird entsprechend der Anzahl der Turmsegmente 120 wiederholt.

In einem weiteren Schritt 213 können die Verbindungen von Teilsegmenten 122 an vertikalen Schnittstellen von Ringsegmenten 121 am Boden getrennt werden.

In einem weiteren Schritt 214 können die Segmente 120 dann gegebenenfalls vor Ort zerkleinert werden, beispielsweise mittels Abbruchbagger mit Abbruchschere und Meißel. Hierbei kann beispielsweise das Betonmaterial mit einer Brecheranlage auf ein Normalmaß gebrochen werden und beispielsweise im Straßen- und Wegebau wiederverwendet werden. Der Betonstahl geht vorzugsweise als Stahlschrott ebenfalls in die Wiederverwertung.

In einem letzten Schritt 215 wird der demontierte Betonturm dann abtransportiert. Wenn die Zerkleinerung der Segmente nicht vor Ort stattgefunden hat, werden die Segmente 120 abtransportiert und gegebenenfalls an einem anderen Ort zerkleinert.

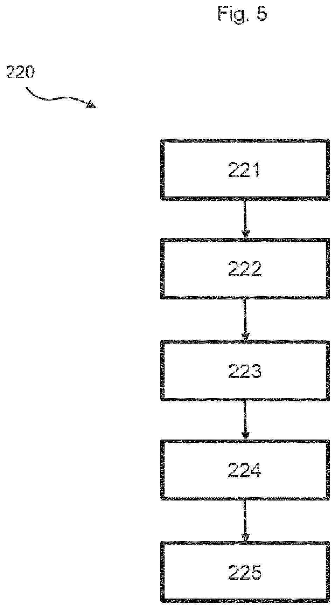

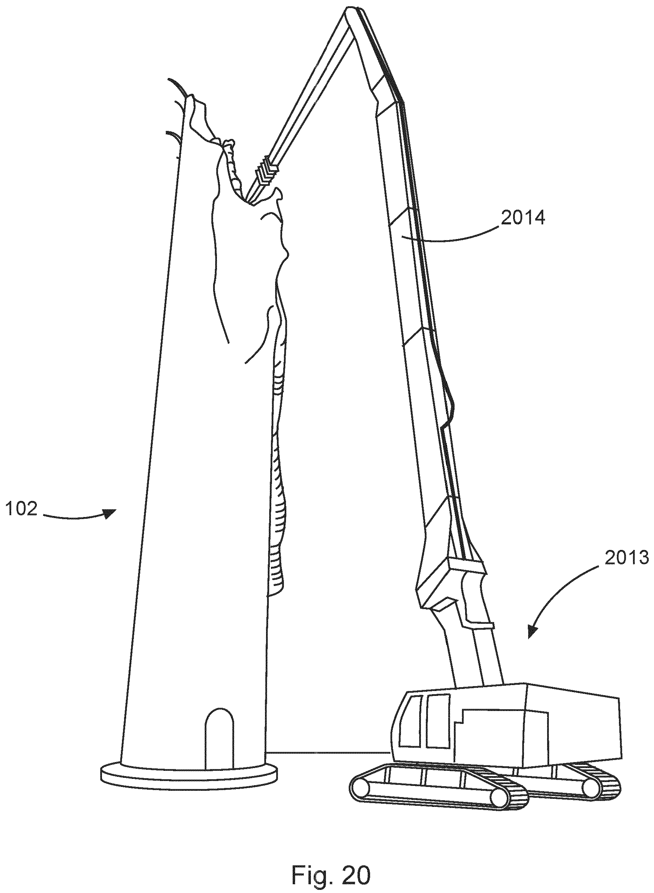

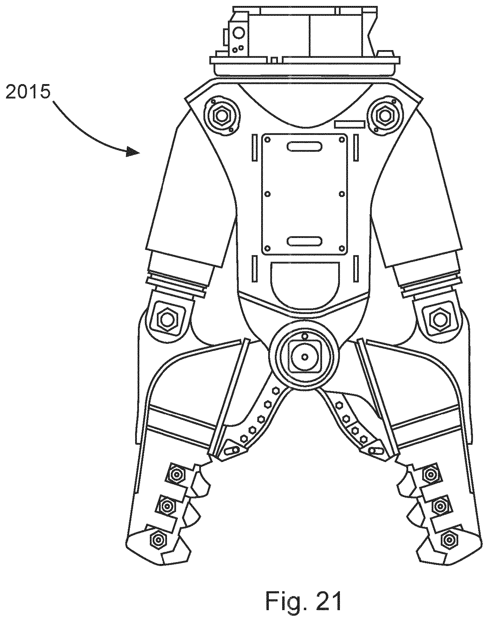

In Figur 5 ist ein schematisches Ablaufdiagramm einer weiteren beispielhaften Ausführungsform von Schritten eines Verfahrens 220 zur Demontage eines Turms 102 einer Windenergieanlage 100 mit einem Abbruchbagger dargestellt. Figur 20 zeigt einen Abbruchbagger 2013 mit longfront bzw. Teleskoparm 2014 bei der Turmdemontage, Figur 21 zeigt eine hydraulisch gesteuerte Abbruchschere 2015.

Dieses Verfahren 220 kann insbesondere eingesetzt werden bei den folgenden Standortbedingungen: freier Standort, beispielsweise Wiesen oder Felder; Waldstandort mit begrenztem Platzangebot; Deichstandort; wassernaher Standort, z.B. mit Gräben, Wasserläufe, Seen in unmittelbarer Umgebung; alpiner Standort. Ferner kann dieses Verfahren 220 insbesondere eingesetzt werden bei Türmen der folgenden Art: Ortbetonturm, Fertigteilbetonturm mit intern geführten Spanngliedern und mit stoffschlüssig verbundenen, insbesondere geklebten, Fugen, Fertigteilbetonturm mit intern geführten Spanngliedern und trockenen Fugen, insbesondere Systemfugen, Fertigteilbetonturm mit extern geführten Spanngliedern und mit stoffschlüssig verbundenen, insbesondere geklebten, Fugen. Bedingt geeignet ist dieses Verfahren 220 in Trinkwasserschutzgebieten.

In einem ersten Schritt 221 des Verfahrens 220 wird aus Sicherheitsgründen der Bereich um den Turm 102 großräumig abgesperrt. Der Radius des abzusperrenden Bereichs beträgt bei einer Höhe des zu demontierenden Turms 102 von ca. 70 m etwa 30 m um den Turm 102.

Im Schritt 222 werden vor der Demontage die Einbauteile des Turms, bis auf die Steigleiter und die Blitzschutzanbindung, welche aus Sicherheitsgründen zunächst noch im Turm verbleiben, entfernt.

Im Schritt 223 wird ein Abbruchbagger 2013 mit longfront 2014 und einer daran angeordneten Abbruchschere 2015 bereitgestellt. Damit werden im Schritt 224 die Turmsegmente 120 des Turms 102 sukzessive von oben nach unten zerkleinert.

Anschließend wird in Schritt 225 das Abbruchmaterial am Boden separiert und gegebenenfalls weiter zerkleinert und dann abtransportiert.

Da Abbruchbagger 2013 in der Regel in ihrer Arbeitshöhe begrenzt sind, kommt das hier dargestellte Verfahren 220 vorzugsweise in Kombination mit anderen Verfahren und Technologien zum Einsatz, insbesondere wenn die Höhe des zu demontierenden Turms größer ist als die Arbeitshöhe des Abbruchbaggers. Vorzugsweise wird die über die Arbeitshöhe des Abbruchbaggers 2013 hinausgehende Höhe des Turms 102 zunächst durch ein anderes Verfahren oder mittels einer anderen Technologie demontiert, bevor das Verfahren 220 eingesetzt wird.

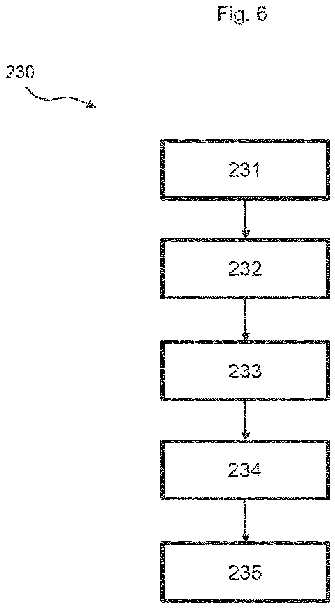

In Figur 6 ist ein schematisches Ablaufdiagramm einer weiteren beispielhaften Ausführungsform von Schritten eines Verfahrens 230 zur Demontage eines Turms 102 eine Windenergieanlage 100 mit einem Seilbagger dargestellt.

Dieses Verfahren 230 kann insbesondere eingesetzt werden bei den folgenden Standortbedingungen: freier Standort, beispielsweise Wiesen oder Felder; Waldstandort mit begrenztem Platzangebot; Deichstandort; wassernaher Standort, z.B. mit Gräben, Wasserläufe, Seen in unmittelbarer Umgebung; alpiner Standort. Ferner kann dieses Verfahren 230 insbesondere eingesetzt werden bei Türmen der folgenden Art: Ortbetonturm, Fertigteilbetonturm mit intern geführten Spanngliedern und mit stoffschlüssig verbundenen, insbesondere geklebten, Fugen, Fertigteilbetonturm mit intern geführten Spanngliedern und trockenen Fugen, insbesondere Systemfugen, Fertigteilbetonturm mit extern geführten Spanngliedern und mit stoffschlüssig verbundenen, insbesondere geklebten, Fugen. Bedingt geeignet ist dieses Verfahren 230 in Trinkwasserschutzgebieten.

Im Schritt 231 wird zunächst der Bereich um den Turm 102 aus Sicherheitsgründen großräumig abgesperrt. Der Radius des abzusperrenden Bereichs beträgt bei einem zu demontierenden Turm mit einer Höhe von 70 m ca. 30 m um den Turm 102.

Vor der Demontage sind dann im Schritt 232 zunächst alle Einbauteile des Turms bis auf die Steigleiter und die Blitzschutzanbindung, welche aus Sicherheitsgründen im Turm 102 verbleiben, zu entfernen.

Im nächsten Schritt 233 ist ein Seilbagger mit einer über eine Hakenflasche am Gittermast des Seilbaggers befestigten Abbruchschere 2015 bereitzustellen. Damit werden im Schritt 234 die Turmsegmente 120 des Turms 102 sukzessive von oben nach unten zerkleinert.

Anschließend wird in Schritt 235 das Abbruchmaterial am Boden separiert und gegebenenfalls weiter zerkleinert und dann abtransportiert.

Da auch Seilbagger in der Regel in ihrer Arbeitshöhe begrenzt sind, kommt das hier dargestellte Verfahren 230 vorzugsweise in Kombination mit anderen Verfahren und Technologien zum Einsatz, insbesondere wenn die Höhe des zu demontierenden Turms größer ist als die Arbeitshöhe des Seilbaggers. Vorzugsweise wird die über die Arbeitshöhe des Seilbaggers hinausgehende Höhe des Turms 102 zunächst durch ein anderes Verfahren oder mittels einer anderen Technologie demontiert, bevor das Verfahren 230 eingesetzt wird.

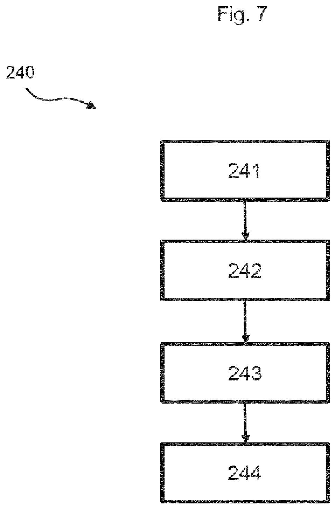

In Figur 7 ist ein schematisches Ablaufdiagramm einer weiteren beispielhaften Ausführungsform von Schritten eines Verfahrens 240 zur Demontage eines Turms 102 eine Windenergieanlage 100 durch Umlegen und Sprengung dargestellt.

Dieses Verfahren 240 kann insbesondere eingesetzt werden bei den folgenden Standortbedingungen: freier Standort, beispielsweise Wiesen oder Felder; alpiner Standort. Ferner kann dieses Verfahren 240 insbesondere eingesetzt werden bei Türmen der folgenden Art: Ortbetonturm, Fertigteilbetonturm mit intern geführten Spanngliedern und mit stoffschlüssig verbundenen, insbesondere geklebten, Fugen, Fertigteilbetonturm mit intern geführten Spanngliedern und trockenen Fugen, insbesondere Systemfugen,

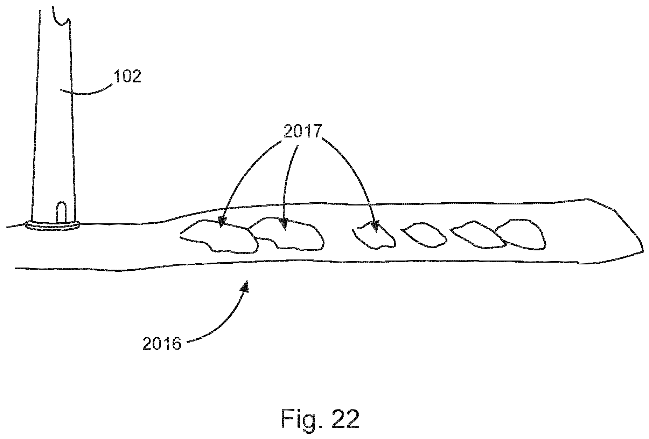

Hier wird in einem ersten Schritt 241 zunächst ein Fallbett 2016 hergestellt, wobei je nach anzutreffenden Baugrund der Mutterboden abzuschieben ist, die Fläche zu entwässern ist und gegebenenfalls zur Dämpfung des Aufpralls des Turms 102 Sandrippen 2017 (vergleiche Figur 22) herzustellen sind. Auch hier ist selbstverständlich eine entsprechende großräumige Absperrung bevorzugt.

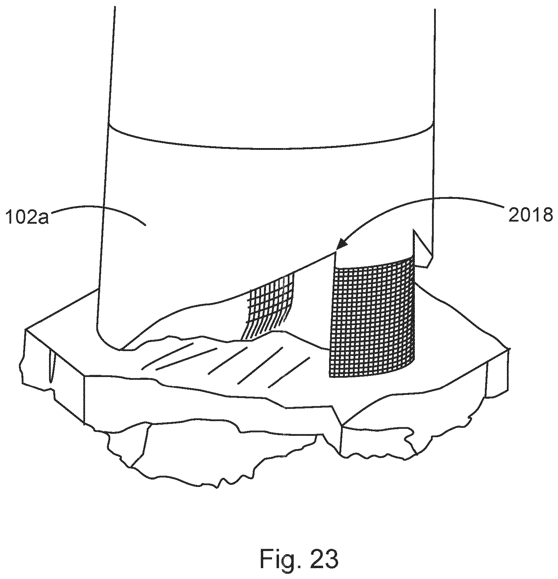

In einem weiteren Schritt 242 wird sodann der Turmfuß 102a vorgeschwächt über einen Keilschnitt 2018, wie in Figur 23 zu erkennen.

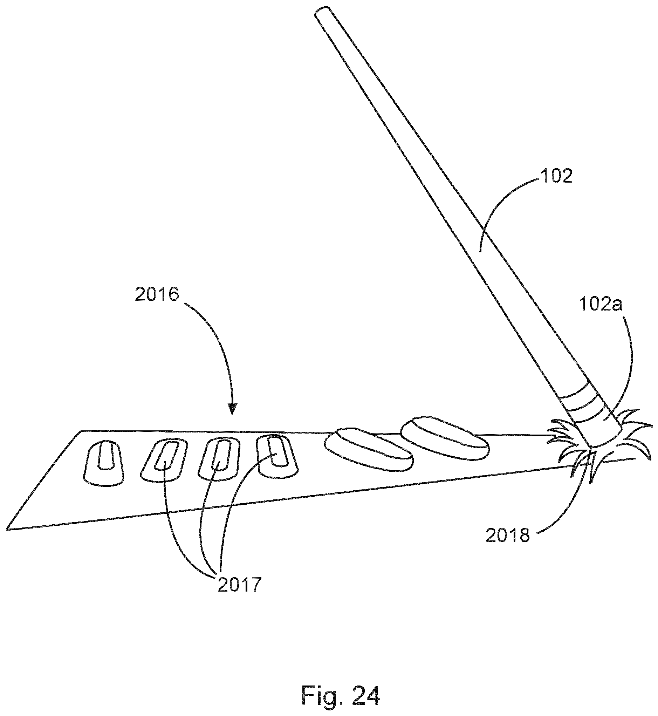

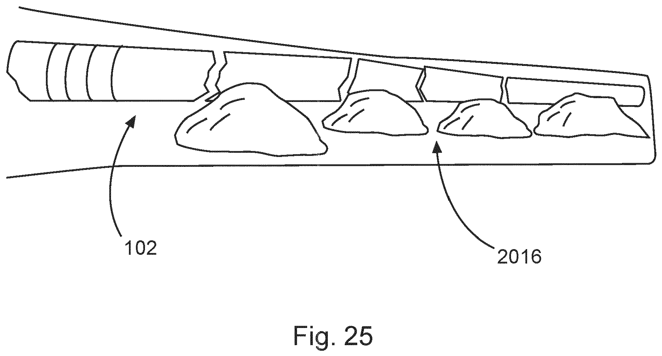

In einem weiteren Schritt 243 werden dann im zu sprengenden Bereich Sprengladungen in Bohrungen gesetzt und gezündet. Dabei wird ein definierter Bereich aus dem Turmfuß 102a herausgesprengt und der Turm 102 fällt in Richtung des vorbereiteten Fallbetts 2016, wie in Figur 24 dargestellt. Der umgelegten Turm 102 ist in Figur 25 zu erkennen. Begleitend sind vorzugsweise Schwingungsmessungen in der Umgebung durchzuführen, was der Kontrolle und einen Nachweis bei eventuell auftretenden Schäden dient.

In einem weiteren Schritt 244 wird das Abbruchmaterial am Boden separiert, um es einer Wiederverwertung zuführen zu können, und abtransportiert.

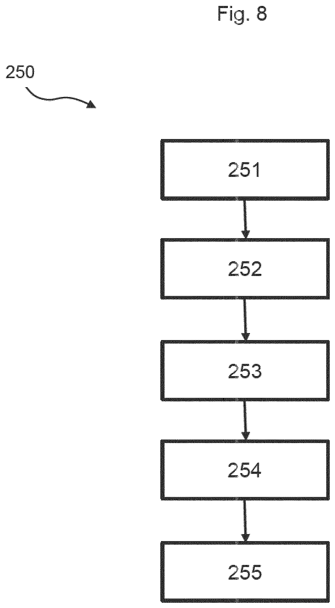

In Figur 8 ist ein schematisches Ablaufdiagramm einer weiteren beispielhaften Ausführungsform von Schritten eines Verfahrens 250 zur Demontage eines Turms 102 einer Windenergieanlage 100 mittels Prallkugel dargestellt.

Dieses Verfahren 250 kann insbesondere eingesetzt werden bei den folgenden Standortbedingungen: freier Standort, beispielsweise Wiesen oder Felder; wassernaher Standort, z.B. mit Gräben, Wasserläufe, Seen in unmittelbarer Umgebung; alpiner Standort. Ferner kann dieses Verfahren 250 insbesondere eingesetzt werden bei Türmen der folgenden Art: Ortbetonturm, Fertigteilbetonturm mit intern geführten Spanngliedern und mit stoffschlüssig verbundenen, insbesondere geklebten, Fugen, Fertigteilbetonturm mit intern geführten Spanngliedern und trockenen Fugen, insbesondere Systemfugen, Fertigteilbetonturm mit extern geführten Spanngliedern und mit stoffschlüssig verbundenen, insbesondere geklebten, Fugen. Bedingt geeignet ist dieses Verfahren 250 bei Trinkwasserschutzgebieten.

Auch bei diesem Verfahren 250 ist in einem ersten Schritt 251 der Bereich um den Turm 102 aus Sicherheitsgründen großräumig abzusperren.

In einem weiteren Schritt 252 sind alle Einbauteile des Turms 102, bis auf die Steigleiter und die Blitzschutzanbindung, welche aus Sicherheitsgründen im Turm verbleiben, zu entfernen. Sodann ist in einem Schritt 253 ein Gittermastkran 2033 mit einem Prallgewicht bereitzustellen.

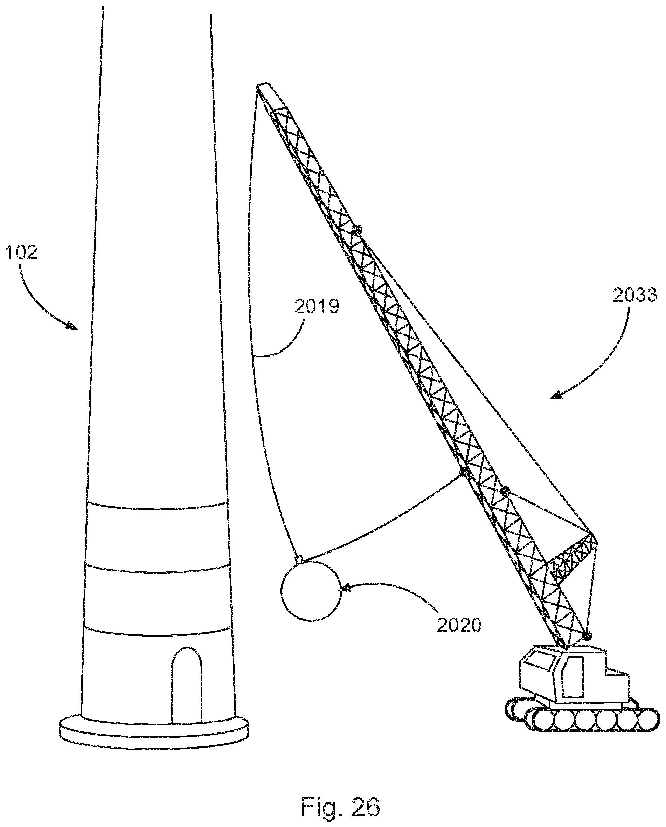

Der eigentliche Abbruch erfolgt im Schritt 254, wobei die an einem Seil 2019 am Kranhaken abgehängte Prallkugel 2020 durch ein zweites Seil horizontal ausgelenkt wird und nach Freigabe gegen den Turm 102 prallt (vgl. Fig. 26). Aufgrund des hohen Gewichts der Prallkugel 2020 löst sich hierbei der Beton von der Bewehrung und wird Stück für Stück aus dem Turm 102 herausgebrochen, wodurch ca. 8 m lange Betonturmstücke zum Kippen gebracht werden können, was ebenfalls in Figur 26 zu erkennen ist.

Auch hier wird in einem weiteren Schritt 255 das Abbruchmaterial am Boden separiert, um es einer Wiederverwertung oder Entsorgung zugänglich zu machen sowie anschließend abtransportiert.

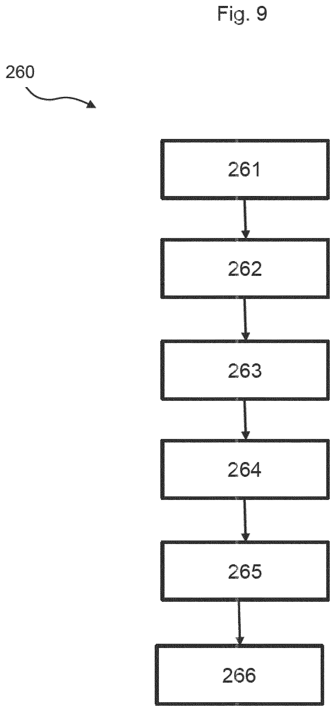

In Figur 9 ist ein schematisches Ablaufdiagramm einer weiteren beispielhaften Ausführungsform von Schritten eines Verfahrens 260 zur Demontage eines Turms 102 eine Windenergieanlage 100 mit einem turmgebundenen Abbruchwerkzeug dargestellt.

Dieses Verfahren 260 kann insbesondere eingesetzt werden bei den folgenden Standortbedingungen: freier Standort, beispielsweise Wiesen oder Felder; Waldstandort mit begrenztem Platzangebot; Deichstandort; Standort mit Versorgungsleitungen, wie z.B. Gasleitungen, in unmittelbarer Nähe; Standort mit Einschränkungen durch Nutzungsversagen von Nachbargrundstücken; Trinkwasserschutzgebiet; Standort mit angrenzender Bebauung; wassernaher Standort, z.B. mit Gräben, Wasserläufe, Seen in unmittelbarer Umgebung; alpiner Standort. Ferner kann dieses Verfahren 260 insbesondere eingesetzt werden bei Türmen der folgenden Art: Ortbetonturm, Fertigteilbetonturm mit intern geführten Spanngliedern und mit stoffschlüssig verbundenen, insbesondere geklebten, Fugen, Fertigteilbetonturm mit intern geführten Spanngliedern und trockenen Fugen, insbesondere Systemfugen. Bedingt geeignet ist dieses Verfahren 260 bei Naturschutzgebieten. Ebenfalls bedingt geeignet ist dieses Verfahren bei Fertigteilbetontürmen mit extern geführten Spanngliedern und mit stoffschlüssig verbundenen, insbesondere geklebten, Fugen.

Auch hier sind in einem ersten Schritt 261 vor der Demontage alle Einbauteile des Turms 102 bis auf die Steigleiter und die Blitzschutzanbindung, welche aus Sicherheitsgründen im Turm 102 verbleiben, zu entfernen. Da bei dem hier beschriebene Verfahren 260 das Abbruchmaterial hauptsächlich in das Turminnere fällt, kann eine Absperrung des Bereichs um den Turm 102 verglichen mit anderen Verfahren gegebenenfalls etwas geringer ausfallen.

In einem optionalen Schritt 262 wird eine seitliche Arbeitsbühne montiert, von der aus das Abbruchwerkzeug gesteuert wird. Alternativ kann das Abbruchwerkzeug gegebenenfalls auch vom Boden aus gesteuert werden.

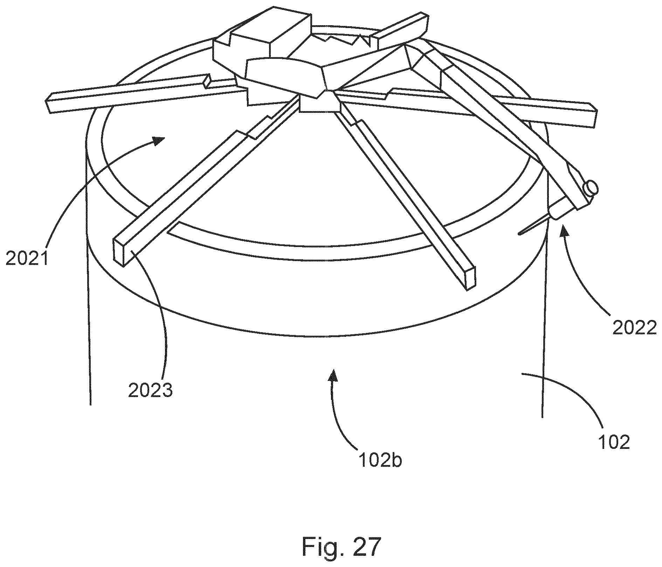

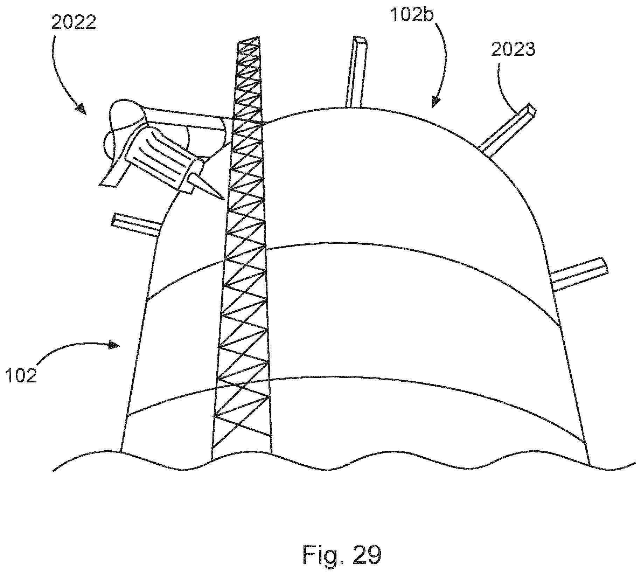

In einem weiteren Schritt 263 wird das turmgebundene Abbruchwerkzeug, wie beispielsweise ein Aufsetz- bzw. Spinnenbagger 2021 (vergleiche Figuren 27 und 29) mit einem Kran auf das obere Ende 102b des Turms 102 aufgesetzt. Ein solcher Aufsetz- bzw. Spinnenbagger 2021 ist mit einer Abbruchschere 2015 oder beispielsweise einem Meißel 2022 ausgestattet und kann über Ausleger 2023 an der Turmwand des oberen Endes 102b des Turms 102 befestigt sein, wie in Figuren 27 und 29 zu erkennen.

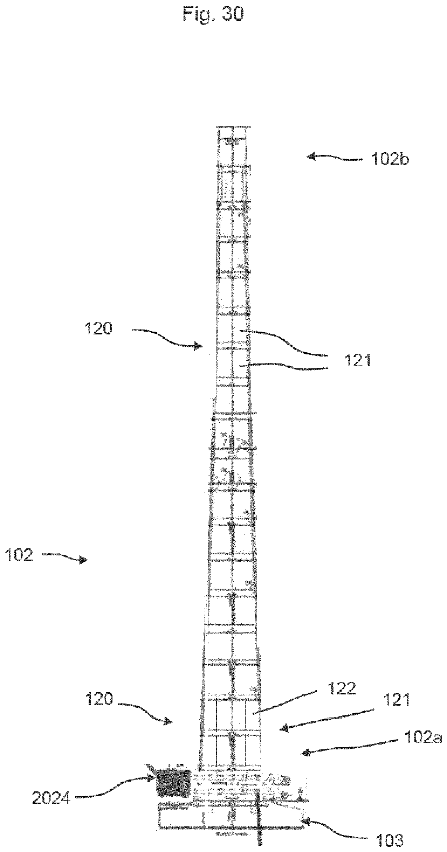

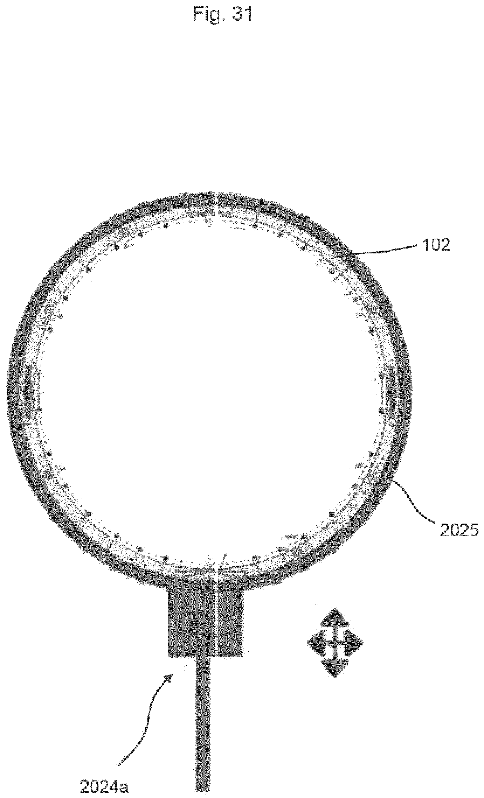

Vorzugsweise folgt das turmgebundene Abbruchwerkzeug dem Turm 102 entlang seiner vertikalen Achse, vorzugsweise selbsttätig. Ein Beispiel hierfür ist in den Figuren 30-32 gezeigt. In der Variante nach Figur 31 weist das turmgebundene Abbruchwerkzeug 2024a etwa zwei oder mehrere, um den Umfang des Turms gelegte Ketten oder Seile 2025 auf, welche mittels einer Vorrichtung um den Umfang des Turm 102 gespannt werden und wechselseitig gelöst und in der vertikalen Achse des Turms 102 verfahren werden. Durch eine solche wechselseitige Verspannung hält sich das turmgebundene Abbruchwerkzeug 2024a vorzugsweise mittels Reib- und/oder Formschluss (insbesondere aufgrund der konischen Bauform des Turms 102) an dem bestehenden Turm 102 auf Position und durch das in der vertikalen Achse versetzbare zweite Seil 2025 kann sich das turmgebundene Abbruchwerkzeug 2024a am Turm 102 nach oben bewegen.

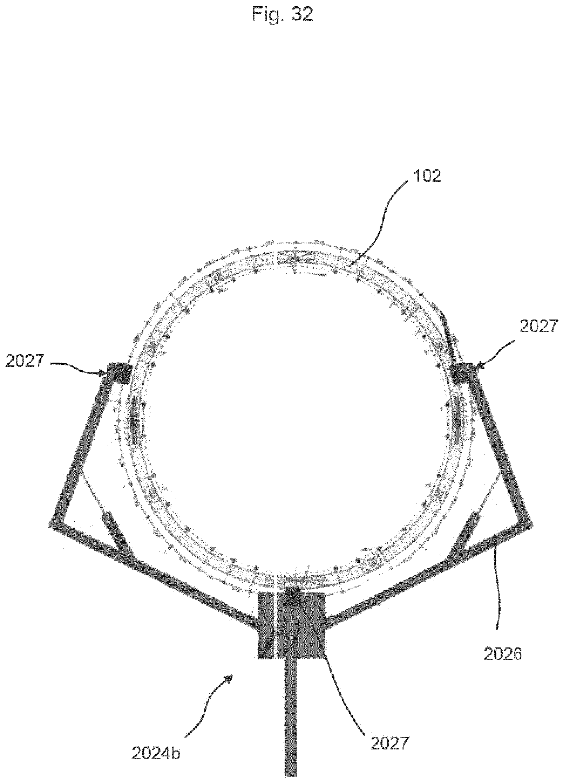

In der Variante nach Figur 32 weist das das turmgebundene Abbruchwerkzeug 2024b eine Stahlkonstruktion 2026 mit einer Lagerung auf. Hierbei sind mit entsprechendem Anpressdruck beaufschlagte und der Kontur des Turms 102 folgende Antriebe 2027 vorgesehen. Die Dreipunktlagerung umgreift dabei den Umfang des Turms 102 zu mehr als 180°, wie in Figur 32 zu erkennen ist.

Ein turmgebundenes Abbruchwerkzeug 2024, 2024a, 2024b bewegt sich somit vorzugsweise zu Beginn der Demontagearbeiten vom Turmfuß 201b (s. Figur 30) bis an den oberen Rand 102b des Turms 102 und beginnt von dort abwärts, die Turmsegmente 120 beispielsweise mittels einer Abbruchschere 2015 oder einem Meißel 2022 zu zerkleinern.

Im nächsten Schritt 264 wird mit der Abbruchschere 2015 oder beispielsweise einem Meißel 2022 der Turm 102 Stück für Stück von oben nach unten abgetragen. Das im Turminneren sich ansammelnde Abbruchmaterial kann anschließend in einem Schritt 265 zusammen mit dem unteren Turmende mit einem Bagger vom Boden aus entfernt werden. Auch hier wird in einem letzten Schritt 266 das Abbruchmaterial am Boden separiert, um wiederverwendet oder entsorgt werden zu können, und abtransportiert.

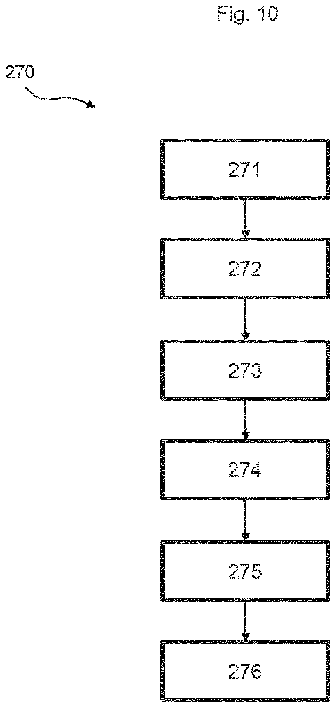

In Figur 10 ist ein schematisches Ablaufdiagramm einer weiteren beispielhaften Ausführungsform von Schritten Verfahrens 270 zur Demontage eines Turms 102 einer Windenergieanlage 100 mit thermischer Trennung, insbesondere mit einer Sauerstofflanze, dargestellt. Das hier beschriebene Verfahren 270 ermöglicht ebenfalls einen segmentweisen Rückbau, bei dem ganze Segmente 120 vom Turm 102 abgehoben werden, und eignet sich ferner insbesondere auch für Türme 102 mit intern geführten Spanngliedern.

Dieses Verfahren 270kann insbesondere eingesetzt werden bei den folgenden Standortbedingungen: freier Standort, beispielsweise Wiesen oder Felder; Standort mit Versorgungsleitungen, wie z.B. Gasleitungen, in unmittelbarer Nähe; Standort mit Einschränkungen durch Nutzungsversagen von Nachbargrundstücken; wassernaher Standort, z.B. mit Gräben, Wasserläufe, Seen in unmittelbarer Umgebung. Ferner kann dieses Verfahren 260 insbesondere eingesetzt werden bei Türmen der folgenden Art: Fertigteilbetonturm mit intern geführten Spanngliedern und mit stoffschlüssig verbundenen, insbesondere geklebten, Fugen, Fertigteilbetonturm mit intern geführten Spanngliedern und trockenen Fugen, insbesondere Systemfugen, Fertigteilbetonturm mit extern geführten Spanngliedern und mit stoffschlüssig verbundenen, insbesondere geklebten, Fugen. Bedingt geeignet ist dieses Verfahren 260 bei Trinkwasserschutzgebieten. Ebenfalls bedingt geeignet ist dieses Verfahren 260 bei Ortbetontürmen.

Auch hier sind in einem ersten Schritt 271 vor der Demontage die Einbauteile des Turms 102 bis auf die Steigleiter und die Blitzschutzanbindung, welche aus Sicherheitsgründen im Turm verbleiben, zu entfernen.

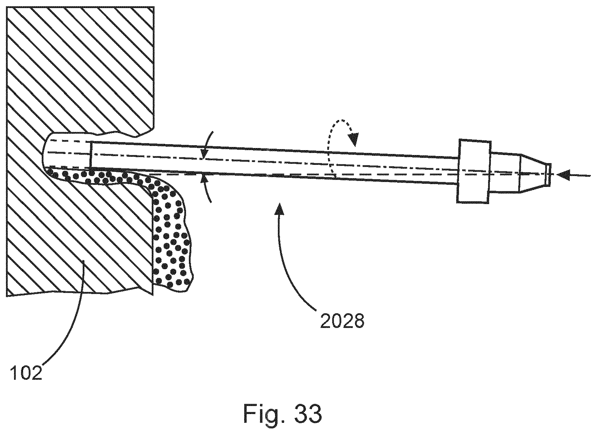

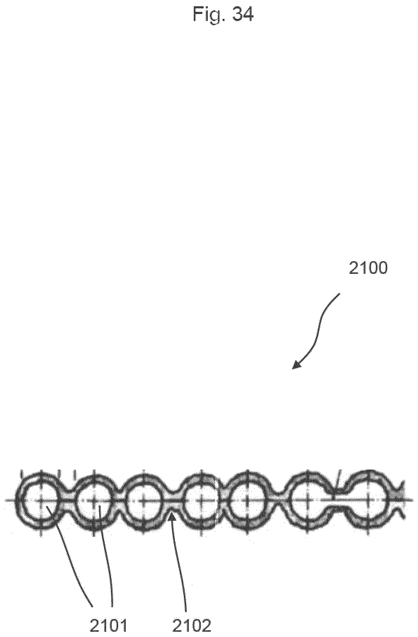

In einem Schritt 272 wird vorzugsweise eine Arbeitsplattform am oberen Ende des Turms bereitgestellt. Diese wandert vorzugsweise mit fortschreitender Demontage des Turms und damit abnehmender Höhe des Turms weiter nach unten. In einem Schritt 273 wird, vorzugsweise von dieser Arbeitsplattform aus, eine thermische Trennung der intern geführten Spannglieder durchgeführt, beispielsweise mittels einer Sauerstofflanze 2028 (vgl. Figur 33). Hierbei erfolgt meist kein fortschreitender Schneidevorgang, sondern vielmehr werden mit mehreren Bohrungen die einzelnen Spannglieder getrennt, wobei die mehreren Bohrungen aneinandergereiht eine Trennperforation 2100 (vgl. Figur 34) bilden. Die zwischen den Bohrungen 2101 verbleibenden Stege 2102 weisen bei mineralischen Werkstoffen eine spröde Glasstruktur auf und sind leicht trennbar.

In einem weiteren Schritt 274 wird das jeweils oberste Turmsegment 120o, insbesondere nachdem es zu etwa 2/3 durchtrennt ist, an einen Demontagekran angeschlagen. In einem weiteren Schritt 275 wird dann ein, vorzugsweise hydraulisches, Spaltgerät 2029 (vergleiche Figur 35) eingesetzt, mit dem das oberste Segment 120o vom darunterliegenden Segment abgetrennt wird.

In einem weiteren Schritt 276 wird dann das oberste Segment 120o vom Kran angehoben und beispielsweise auf einer Lagerfläche in Turmnähe abgestellt. Gegebenenfalls noch vorhandene Verbindungen zwischen Teilsegmenten 122 an vertikalen Schnittstellen können auch noch am Boden gelöst werden.

Die Schritte 273-276 werden entsprechend der Anzahl der zu demontierenden Segmente 120 wiederholt.

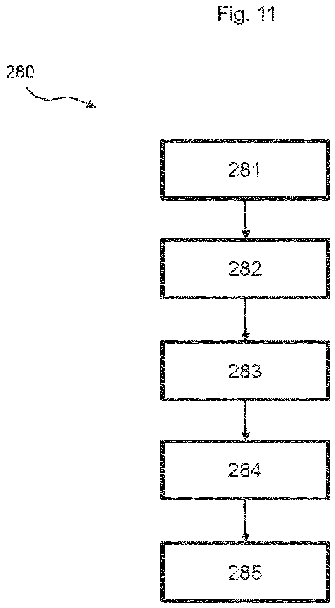

In Figur 11 ist ein schematisches Ablaufdiagramm einer weiteren beispielhaften Ausführungsform von Schritten eines Verfahrens 280 zur Demontage des Turms 102 einer Windenergieanlage 100 mit Hochdruckwasserstrahlschneiden dargestellt. Das hier beschriebene Verfahren 280 ermöglicht ebenfalls einen segmentweisen Rückbau, bei dem ganze Segmente 120 vom Turm 102 abgehoben werden, und eignet sich ferner insbesondere auch für Türme 102 mit intern geführten Spanngliedern.

Dieses Verfahren 280 kann insbesondere eingesetzt werden bei den folgenden Standortbedingungen: freier Standort, beispielsweise Wiesen oder Felder; Deichstandort; Standort mit Versorgungsleitungen, wie z.B. Gasleitungen, in unmittelbarer Nähe. Ferner kann dieses Verfahren 280 insbesondere eingesetzt werden bei Türmen der folgenden Art: Fertigteilbetonturm mit intern geführten Spanngliedern und mit stoffschlüssig verbundenen, insbesondere geklebten, Fugen, Fertigteilbetonturm mit intern geführten Spanngliedern und trockenen Fugen, insbesondere Systemfugen, Fertigteilbetonturm mit extern geführten Spanngliedern und mit stoffschlüssig verbundenen, insbesondere geklebten, Fugen. Bedingt geeignet ist dieses Verfahren 280 bei den folgenden Standortbedingungen: Naturschutzgebiet; alpiner Standort. Ebenfalls bedingt geeignet ist dieses Verfahren 280 bei Ortbetontürmen.

Auch hier sind in einem ersten Schritt 281 vor der Demontage die Einbauteile des Turms 102 bis auf die Steigleiter und die Blitzschutzanbindung, welche aus Sicherheitsgründen im Turm verbleiben, zu entfernen.

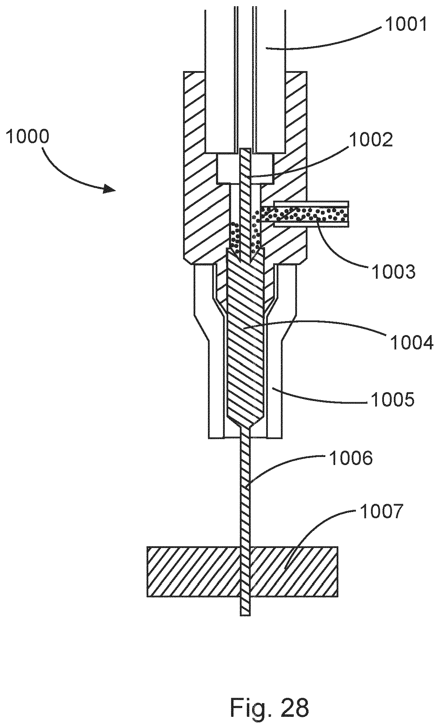

In einem Schritt 282 wird vorzugsweise eine Arbeitsplattform am oberen Ende des Turms bereitgestellt. Diese wandert vorzugsweise mit fortschreitender Demontage des Turms und damit abnehmender Höhe des Turms weiter nach unten. In einem Schritt 283 erfolgt, vorzugsweise von dieser Arbeitsplattform aus, eine Trennung der intern geführten Spannglieder mittels Hochdruckwasserstrahlschneiden. In Figur 28 ist eine Prinzipskizze des Düsensystems beim Hochdruckwasserstrahlschneiden mit Abrasivstoffen dargestellt. Mit 1001 ist das Wasser unter Hochdruck bezeichnet, mit 1002 die Reinwasserdüse. Über die Zuleitung 1003 werden die Abrasivstoffen der Abrasivfokussierdüse1004 zugeführt. Aus der Führung 1005 des Düsensystems 1000 tritt der Schneidstrahl 1006 aus und trifft auf das zu schneidende Material 1007, welches vom Schneidstrahl 1006 durchdrungen wird.

In einem weiteren Schritt 284 wird das jeweils oberste Turmsegment 120o, insbesondere nachdem es zu etwa 2/3 durchtrennt ist, an einen Demontagekran angeschlagen und dann vollständig durchtrennt.

In einem weiteren Schritt 285 wird dann das oberste Segment 120o vom Kran angehoben und beispielsweise auf einer Lagerfläche in Turmnähe abgestellt. Gegebenenfalls noch vorhandene Verbindungen zwischen Teilsegmenten 122 an vertikalen Schnittstellen können auch noch am Boden gelöst werden.

Die Schritte 283-285 werden entsprechend der Anzahl der zu demontierenden Segmente 120 wiederholt.

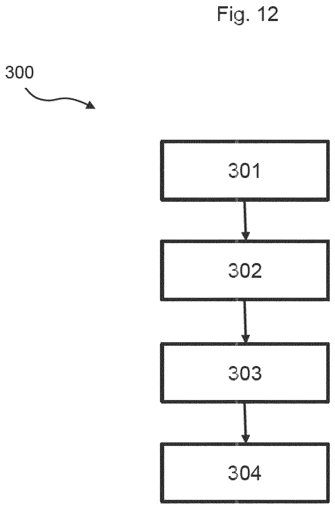

In Figur 12 ist ein schematisches Ablaufdiagramm einer weiteren beispielhaften Ausführungsform von Schritten eines Verfahrens 300 zur Demontage eines Fundaments eines Turms 102 einer Windenergieanlage 100 dargestellt. Eine Demontage eines Fundaments 103 einer Windenergieanlage 100 ist in der Regel nur erforderlich, wenn am Standort kein Wiederaufbau einer baugleichen oder bauähnlichen Anlage vorgesehen ist, bei der das Fundament 103 eventuell erneut genutzt werden kann. Bei einer Wiederverwendung würde die Fundamentoberfläche mittels Hochdruckwasserstrahlverfahren gesäubert und gegebenenfalls bei verpressten Spanngliedern mithilfe einer Kernbohrungen der Verbund zwischen Spannglied und Fundament gelöst, die Spannglieder aus dem Fundament gezogen und die Hüllrohre im Fundament gereinigt.

Wenn das Fundament 103 nicht weiter genutzt werden kann, kann es ganz oder teilweise, gegebenenfalls bis zu einer bestimmten Tiefe, demontiert bzw. rückgebaut werden. Auch hier werden vorzugsweise, wie eingangs beschrieben, die konkreten Maßnahmen zur Demontage des Fundaments 103 nach den Eigenschaften des Fundaments 103 und dem Standort individuell festgelegt.

In einem ersten Schritt 301 wird das Fundament 103 außen freigelegt und die Fundamentabdeckung entfernt. In einem Schritt 302 wird das Fundament 103 vorzugsweise zerkleinert, beispielsweise mittels eines Abbruchbaggers mit Abbruchschere oder Meißel oder durch eine Lockersprengung. Bei der Variante mit Einsatz eines Abbruchbaggers ist es bevorzugt, dass der Abbruchbagger umlaufend um das Fundament 103 fahren kann.

Bei der Variante des Zerkleinerns durch Lockersprengung werden in das Fundament mehrere Bohrungen, vorzugsweise in einem Raster, eingebracht. Das Raster der Bohrungen richtet sich insbesondere nach der Fundamentgröße, dem Bewehrungsgrad und der Betonfestigkeit. In diese Bohrungen wird ein Sprengmittel eingebracht und das Fundament wieder abgedeckt, beispielsweise mit Kunststoffmatten und Erdreich. Nach der Zündung der Sprengmittel wird die Abdeckung wieder entfernt und das Fundament 103 freigelegt. Durch die Sprengung löst sich der Beton weitgehend von der Bewehrung und lässt sich mittels Bagger aus der Grube herausbefördern.

In einem weiteren Schritt 304 wird das Abbruchmaterial am Boden separiert, um einer Wiederverwendung oder Entsorgung zugeführt zu werden und abtransportiert.

Dieses Verfahren 300 in der Variante mit Abbruchbagger und Abbruchschere kann insbesondere eingesetzt werden bei den folgenden Standortbedingungen: freier Standort, beispielsweise Wiesen oder Felder; Waldstandort mit begrenztem Platzangebot; Deichstandort; Standort mit Versorgungsleitungen, wie z.B. Gasleitungen, in unmittelbarer Nähe; Standort mit Einschränkungen durch Nutzungsversagen von Nachbargrundstücken; Naturschutzgebiet; Trinkwasserschutzgebiet; Standort mit angrenzender Bebauung; wassernaher Standort, z.B. mit Gräben, Wasserläufe, Seen in unmittelbarer Umgebung; alpiner Standort. Dieses Verfahren 300 in der Variante mit Lockersprengung kann insbesondere eingesetzt werden bei den folgenden Standortbedingungen: freier Standort, beispielsweise Wiesen oder Felder; Waldstandort mit begrenztem Platzangebot; Standort mit Einschränkungen durch Nutzungsversagen von Nachbargrundstücken; Trinkwasserschutzgebiet; alpiner Standort. Ferner kann dieses Verfahren 300 in der Variante mit Abbruchbagger und Abbruchschere und in der Variante mit Lockersprengung grundsätzlich unabhängig von der Art des (restlichen) Turms eingesetzt werden, also insbesondere bei Türmen der folgenden Art: Ortbetonturm, Fertigteilbetonturm mit intern geführten Spanngliedern und mit stoffschlüssig verbundenen, insbesondere geklebten, Fugen, Fertigteilbetonturm mit intern geführten Spanngliedern und trockenen Fugen, insbesondere Systemfugen, Fertigteilbetonturm mit extern geführten Spanngliedern und mit stoffschlüssig verbundenen, insbesondere geklebten, Fugen, Fertigteilbetonturm mit extern geführten Spanngliedern und mit trockenen Fugen, insbesondere Systemfugen.

## Patentansprüche

1. Verfahren (1) zur Demontage eines Turms (102) einer Windenergieanlage (100),
umfassend:
- Auswählen (11) geeigneter Demontage-Maßnahmen in Abhängigkeit des Turmstandorts und der Turmeigenschaften;
- Vorbereiten (12) der Demontage, insbesondere des Turms (102) und ggf. der Umgebung;
- Durchführen (13) der Demontage; und
- Abtransportieren (14) des demontierten Turms,
**gekennzeichnet durch**:
- Untersuchen von Beschichtungen des Turms (102) und/oder seinen Bauteilen; und
- Entfernen von Beschichtungen.

2. Verfahren (1) nach dem vorhergehenden Anspruch,
wobei der Turm (102) ein Fundament (103) umfasst.

3. Verfahren (1) nach mindestens einem der vorhergehenden Ansprüche, wobei der Turm (102) Betonfertigteile und/oder Ortbetonteile umfasst.

4. Verfahren (1) nach mindestens einem der vorhergehenden Ansprüche, wobei der Turm (102) durch extern geführte Spannglieder (2008) vorgespannt ist.

5. Verfahren (1) nach mindestens einem der vorhergehenden Ansprüche, wobei der Turm (102) durch intern geführte Spannglieder vorgespannt ist.

6. Verfahren (1) nach mindestens einem der vorhergehenden Ansprüche, wobei benachbarte Turmsegmente (120) ganz oder teilweise stoffschlüssig und/oder formschlüssig und/oder kraftschlüssig verbunden sind.

7. Verfahren (1) nach mindestens einem der vorhergehenden Ansprüche, wobei das Verfahren einsetzbar ist an einem oder mehreren der folgenden Standorte von Windenergieanlagen (100):
- freier Standort, beispielsweise Wiesen oder Felder;
- Waldstandort mit begrenztem Platzangebot;
- Deichstandort;
- Standort mit Versorgungsleitungen, wie z.B. Gasleitungen, in unmittelbarer Nähe;
- Standort mit Einschränkungen durch Nutzungsversagen von Nachbargrundstücken;
- Naturschutzgebiet;
- Trinkwasserschutzgebiet;
- Standort mit angrenzender Bebauung;
- wassernaher Standort, z.B. mit Gräben, Wasserläufe, Seen in unmittelbarer Umgebung;
- alpiner Standort.

8. Verfahren (1) nach mindestens einem der vorhergehenden Ansprüche, **gekennzeichnet durch**:
- Entfernen von Einbauteilen im Turminneren, und/oder
- Installieren einer Arbeitsplattform (120) im Turminneren und/oder außerhalb des Turms, insbesondere unter Nutzung von Befestigungspunkten, die vorzugsweise auch bereits für die Montage genutzt wurden und/oder an z.B. **durch** Kernbohrungen neu hergestellten Befestigungspunkten.

9. Verfahren (1) nach mindestens einem der vorhergehenden Ansprüche, **gekennzeichnet durch**:
- Trennen der Spannglieder (2008); und/oder
- Trennen benachbarter Turmsegmente (120); und/oder
- Entfernen des oberen Turmsegments (120o), insbesondere **durch** Anschlagen an einem Demontagekran und anschließendes Anheben, Verschwenken und Absetzen; und/oder
- Umlegen des Turms (102), vorzugsweise über einen Keilschnitt (2018) am Turmfuß (102a) sowie ggf. anschließender Sprengung; und/oder
- Zerkleinern von Turmsegmenten (120); und/oder
- Trennen der zerkleinerten Turmsegmente (120) nach ihren Bestandteilen.

10. Verfahren (1) nach dem vorhergehenden Anspruch,
wobei das Trennen der Spannglieder umfasst:
- Trennen von intern geführten Spanngliedern mittels eines thermischen Verfahrens und/oder einer Sauerstofflanze (2028) und/oder eines Hochdruckwasserstrahls (1006).

11. Verfahren (1) nach mindestens einem der vorhergehenden Ansprüche 9-10, wobei das Trennen der Spannglieder umfasst:
- Entspannen von extern geführten Spanngliedern (2008); und/oder
- Trennen von extern geführten Spanngliedern (2008), insbesondere am Turmkopf (102b) oder am Turmfuß (102a); und/oder
- Abziehen und ggf. Aufwickeln von extern geführten Spannglieder (2008), insbesondere mittels eines Auftrommelgeräts (2007).

12. Verfahren (1) nach mindestens einem der vorhergehenden Ansprüche 9-11, wobei das Trennen benachbarter Turmsegmente (120), insbesondere an horizontalen Fugen, erfolgt unter Verwendung
- einer Betonwandsäge (2003) und/oder
- einer Blattsäge und/oder
- einer Seilsäge (2005) und/oder
- einer Sauerstofflanze (2028) und/oder
- eines Hochdruckwasserstrahls (1006) und/oder
- eines Spaltgeräts (2029).

13. Verfahren (1) nach mindestens einem der vorhergehenden Ansprüche 9-12, wobei das Trennen benachbarter Turmsegmente (120), insbesondere an vertikalen Fugen, erfolgt durch Trennen von Schraubverbindungen (2031).

14. Verfahren (1) nach mindestens einem der vorhergehenden Ansprüche 9-13, wobei das Zerkleinern von Turmsegmenten erfolgt mittels
- Sprengung; und/oder

15. Verfahren (1) nach mindestens einem der vorhergehenden Ansprüche 9-14, wobei das Zerkleinern von Turmsegmenten erfolgt mittels
- Bodengebundenem Abbruchwerkzeug, wie Abbruchbagger (2013), Prallkugel (2020), Seilbagger, Abbruchschere (2015); und/oder
- Turmgebundenem Abbruchwerkzeug, wie Aufsetzbagger (2021), Spinnenbagger (2021), Abbruchschere (2015).

## Claims

1. A method (1) for disassembling a tower (102) of a wind power plant (100), comprising the following steps:
- selecting (11) suitable disassembly measures as a function of the tower location and the tower characteristics;
- preparing (12) the disassembly, in particular of the tower (102) and optionally the surroundings;
- carrying out (13) the disassembly; and
transporting (14) the disassembled tower away**characterized by**:
- examining coatings of the tower (102) and/or the components thereof; and
- removing coatings.

2. The method (1) as claimed in the preceding claim,
wherein the tower (102) comprises a foundation (103).

3. The method (1) as claimed in at least one of the preceding claims,
wherein the tower (102) comprises prefabricated concrete units and/or site-cast concrete units.

4. The method (1) as claimed in at least one of the preceding claims,
wherein the tower (102) is prestressed by externally guided tendons (2008).

5. The method (1) as claimed in at least one of the preceding claims,
wherein the tower (102) is prestressed by internally guided tendons.

6. The method (1) as claimed in at least one of the preceding claims,
wherein adjacent tower segments (120) are fully or partially connected in a materially integral and/or form-fitting and/or force-fitting manner.

7. The method (1) as claimed in at least one of the preceding claims,
wherein the method is able to be used at one or a plurality of the following locations of wind power plants (100):
- open location, for example meadows or fields;
- forest location with limited available space;
- dyke location;
- location with utility lines such as, for example, gas lines, in the immediate vicinity;
- location with limitations as a result of denial of use of neighboring properties;
- nature reserve;
- drinking water protection zone;
- location with adjacent buildings;
- water-proximal location, for example with ditches, waterways, lakes in the immediate vicinity;
- mountainous location.

8. The method (1) as claimed in at least one of the preceding claims,
**characterized by**:
- removing installed parts in the interior of the tower, and/or
- installing a work platform (120) in the interior of the tower and/or outside the tower, in particular while utilizing fastening points which have preferably already been utilized also for assembling and/or on fastening points which have been newly established by core drilling, for example.

9. The method (1) as claimed in at least one of the preceding claims,
**characterized by**:
- separating the tendons (2008); and/or
- separating adjacent tower segments (120); and/or
- removing the upper tower segment (120o), in particular by lashing to a disassembly crane and subsequent lifting, pivoting and lowering; and/or
- felling the tower (102), preferably by way of a notch cut (2018) on the tower base (102a) as well as optionally subsequent detonating; and/or
- comminuting tower segments (120); and/or
- separating the comminuted tower segments (120) according to the component parts thereof.

10. The method (1) as claimed in the preceding claim,
wherein the separating of the tendons comprises:
- separating internally guided tendons by means of a thermal method and/or an oxygen lance (2028) and/or a high-pressure water jet (1006).

11. The method (1) as claimed in at least one of the preceding claims 9-10, wherein the separating of the tendons comprises:
- relaxing externally guided tendons (2008); and/or
- separating externally guided tendons (2008), in particular on the tower top (102b) or on the tower base (102a); and/or
- pulling off and optionally winding up externally guided tendons (2008), in particular by means of a drum-reeling apparatus (2007).

12. The method (1) as claimed in at least one of the preceding claims 9-11, wherein the separating of adjacent tower segments (120), in particular at horizontal joints, takes place while using
- a concrete wall saw (2003); and/or
- a pad saw; and/or
- a wire saw (2005); and/or
- an oxygen lance (2028); and/or
- a high-pressure water jet (1006); and/or
- a splitting apparatus (2029).

13. The method (1) as claimed in at least one of the preceding claims 9-12, wherein the separating of adjacent tower segments (120), in particular at vertical joints, takes place by separating screw connections (2031).

14. The method (1) as claimed in at least one of the preceding claims 9-13, wherein the comminuting of tower segments takes place by means of:
- detonating; and/or

15. The method (1) as claimed in at least one of the preceding claims 9-14, wherein the comminuting of tower segments takes place by means of
- ground-based demolition tools such as a demolition excavator (2013); impact ball (2020), cable excavator, demolition shears (2015); and/or
- tower-based demolition tools such as a demolition robot (2021), a walking excavator (2021), demolition shears (2015).

## Revendications

1. Procédé (1) de démontage d'une tour (102) d'une éolienne (100), comprenant :
- la sélection (11) de mesures de démontage appropriées en fonction de l'emplacement et des caractéristiques de la tour ;
- la préparation (12) du démontage, en particulier de la tour (102) et, le cas échéant, de l'environnement ;
- la réalisation (13) du démontage ; et
- l'évacuation (14) de la tour démontée,
**caractérisé par** :
- l'examen des revêtements de la tour (102) et/ou de ses composants ; et
- l'élimination de revêtements.

2. Procédé (1) selon la revendication précédente, dans lequel la tour (102) comprend une fondation (103).

3. Procédé (1) selon au moins l'une quelconque des revendications précédentes, dans lequel la tour (102) comprend des pièces préfabriquées en béton et/ou des pièces en béton *in situ.*

4. Procédé (1) selon au moins l'une quelconque des revendications précédentes, dans lequel la tour (102) est précontrainte par des éléments tendeurs (2008) guidés de manière externe.

5. Procédé (1) selon au moins l'une quelconque des revendications précédentes, dans lequel la tour (102) est précontrainte par des éléments tendeurs guidés de manière interne.

6. Procédé (1) selon au moins l'une quelconque des revendications précédentes, dans lequel des segments de tour (120) adjacents sont reliés en totalité ou en partie par liaison de matière et/ou par complémentarité de forme et/ou à force.

7. Procédé (1) selon au moins l'une quelconque des revendications précédentes, dans lequel le procédé peut être utilisé sur un ou plusieurs des emplacements d'éoliennes (100) suivants :
- emplacement libre, par exemple prairies ou champs ;
- site forestier à l'espace limité ;
- site de digue ;
- emplacement avec des conduites d'alimentation, telles que des conduites de gaz, à proximité immédiate ;
- emplacement restreint par la non-utilisation de terrains voisins ;
- réserve naturelle ;
- zone de protection d'eau potable ;
- emplacement avec construction adjacente ;
- emplacement proche de l'eau, par exemple avec des fossés, des cours d'eau, des lacs à proximité immédiate ;
- site alpin.

8. Procédé (1) selon au moins l'une quelconque des revendications précédentes, **caractérisé par** :
- le retrait de composants intégrés à l'intérieur de la tour et/ou
- l'installation d'une plateforme de travail (120) à l'intérieur et/ou à l'extérieur de la tour, notamment en utilisant des points de fixation qui ont de préférence déjà été utilisés pour le montage et/ou sur des points de fixation nouvellement créés, par exemple par des carottages.

9. Procédé (1) selon au moins l'une quelconque des revendications précédentes, **caractérisé par** :
- la séparation des éléments tendeurs (2008) ; et/ou
- la séparation de segments de tour adjacents (120) ; et/ou
- le retrait du segment de tour supérieur (120o), en particulier par accrochage à une grue de démontage puis levage, pivotement et dépose ; et/ou
- le retournement de la tour (102), de préférence par une coupe en coin (2018) au pied de la tour (102a) et, le cas échéant, dynamitage consécutif ; et/ou
- le broyage de segments de tour (120) ; et/ou
- la séparation des segments de tour (120) broyés selon leurs composants.

10. Procédé (1) selon la revendication précédente, dans lequel la séparation des éléments tendeurs comprend :
- la séparation d'éléments tendeurs guidés de manière interne au moyen d'un procédé thermique et/ou d'une lance à oxygène (2028) et/ou d'un jet d'eau à haute pression (1006).

11. Procédé (1) selon au moins l'une quelconque des revendications précédentes 9 et 10, dans lequel la séparation des éléments tendeurs comprend :
- la détente d'éléments tendeurs (2008) guidés de manière externe ; et/ou
- la séparation d'éléments tendeurs (2008) guidés de manière externe, en particulier sur la tête de tour (102b) ou sur le pied de tour (102a) ; et/ou
- le retrait et, le cas échéant, l'enroulement d'éléments tendeurs (2008) guidés de manière externe, en particulier au moyen d'un enrouleur (2007).

12. Procédé (1) selon au moins l'une quelconque des revendications précédentes 9 à 11, dans lequel la séparation de segments de tour (120) adjacents, en particulier sur des joints horizontaux, est effectuée en utilisant
- une scie murale à béton (2003) et/ou
- une scie à lame et/ou
- une scie à câble (2005) et/ou
- une lance à oxygène (2028) et/ou
- un jet d'eau à haute pression (1006) et/ou
- un appareil à fendre (2029).

13. Procédé (1) selon au moins l'une quelconque des revendications précédentes 9 à 12, dans lequel la séparation de segments de tour (120) adjacents, en particulier sur des joints verticaux, est effectuée par séparation de liaisons vissées (2031).

14. Procédé (1) selon au moins l'une quelconque des revendications précédentes 9 à 13, dans lequel le broyage de segments de tour est effectué au moyen
- d'une explosion ; et/ou

15. Procédé (1) selon au moins l'une quelconque des revendications précédentes 9 à 14, dans lequel le broyage de segments de tour est effectué au moyen
- d'un outil de démolition fixé au sol, tel qu'un excavateur de démolition (2013), une boule d'impact (2020), un excavateur à câble, une cisaille de démolition (2015) ; et/ou
- d'un outil de démolition fixé à la tour, tel qu'une pelle sur pneus (2021), une pelle-araignée (2021), une cisaille de démolition (2015).
